# EUROPEAN PATENT APPLICATION

(11) **EP 4 572 352 A1**
(43) Date of publication of application: **18.06.2025**
(21) Application number: 22954654.4
(22) Date of filing: 12.08.2022
(51) Int. Cl.: H04W 8/02

(54) **INFORMATION PROCESSING METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: SHANG, Zhengyi, Beijing 100085 (CN); LU, Wei, Beijing 100085 (CN)
(74) Representative: Dehns Germany Partnerschaft mbB
(86) International application number: PCT/CN2022/112302
(87) International publication number: WO 2024/031702

(57) **Abstract**

Provided in the embodiments of the present disclosure are an information processing method and apparatus, and a communication device and a storage medium. The information processing method is executed by an NF in a VPLMN, and comprises: sending first request information to an NWDAF, such that the NWDAF sends second request information to UDM, wherein the first request information comprises first identification information of at least one first UE, and the first request information is used for requesting data and/or an analysis result of the first UE; and the second request information comprises the first identification information, and the second request information is used for requesting user consent information of the first UE.

## Description

### TECHNICAL FIELD

The present disclosure relates to but is not limited to the field of wireless communication technology, and in particular, to an information processing method and apparatus, a communication device and a storage medium.

### BACKGROUND

In related art, under the roaming scenarios, the visited public land mobile network (VPLMN) and/or the home public land mobile network (HPLMN) may need to collect data, and/or for performing analysis, from the VPLMN and/or HPLMN. In this case, data of user equipment (UE) and the like may be exchanged between different entities or functions (e.g., entities or functions in VPLMN, and/or entities or functions in HPLMN), which entities may be subject to different provisions regarding user consent.

However, freely exposing private information of UE and the like to network elements in VPLMN/HPLMN may lead to privacy leakage of UE. Therefore, further research is required on how to check user consent in roaming scenarios.

### SUMMARY

Some embodiments of the present disclosure provide an information processing method and apparatus, a communication device, and a storage medium.

According to a first aspect of embodiments of the present disclosure, an information processing method is provided, which is performed by a network function (NF) in a visited public land mobile network (VPLMN) and includes:
sending first request information to a network data analytics function (NWDAF), thereby causing the NWDAF to send second request information to a unified data management (UDM);
where the first request information includes first identity information of at least one first UE, and the first request information is used to request data and/or analysis result of the first UE; the second request information includes the first identity information, and the second request information is used to request user consent information of the first UE.

In some embodiments, the first request information further includes at least one of:
roaming indication information, indicating that the first UE is a roaming UE;
network identity information, indicating the VPLMN in which the first UE roams and/or a home public land mobile network (HPLMN) to which the first UE belongs; and
second identity information of the NF in the VPLMN, where the second identity information includes at least one of: identity information indicating an APP in the NF; service identity information indicating a service, and identity information indicating the NF.

In some embodiments, the NWDAF is a visited network data analytics function (V-NWDAF) or a home network data analytics function (H-NWDAF).

In some embodiments, the method includes at least one of:
receiving first response information sent by the V-NWDAF, where the first response information includes: the data and/or analysis result of the first UE; and
receiving rejection indication information sent by the V-NWDAF, where the rejection indication information is used to indicate that the data and/or analysis result is not allowed to be provided to the NF in the VPLMN.

According to a second aspect of embodiments of the present disclosure, an information processing method is provided, which is performed by a V-NWDAF and includes:
receiving first request information sent by an NF in a VPLMN, where the first request information includes first identity information of at least one first UE, and the first request information is used to request data and/or analysis result of the first UE; and
sending the first request information to an H-NWDAF, thereby causing the H-NWDAF to send second request information to a UDM, where the second request information includes the first identity information, and the second request information is used to request user consent information of the first UE.

In some embodiments, the first request information further includes at least one of:
roaming indication information, indicating that the first UE is a roaming UE;
network identity information, indicating the VPLMN in which the first UE roams and/or an HPLMN to which the first UE belongs; and
second identity information of the NF in the VPLMN, where the second identity information includes at least one of: identity information indicating an APP in the NF; service identity information indicating a service, and identity information indicating the NF.

In some embodiments, sending the first request information to the H-NWDAF includes:
determining, based on policy information, that the NF in the VPLMN is allowed to request the data and/or analysis result, where the policy information includes: operator policy information and/or regulation policy information; and
sending the first request information to the H-NWDAF.

In some embodiments, the method includes: receiving first response information sent by the H-NWDAF, where the first response information includes: the data and/or analysis result of the first UE; and
sending the first response information to the NF in the VPLMN.

In some embodiments, the method includes: receiving rejection indication information sent by the H-NWDAF, where the rejection indication information is used to indicate that the data and/or analysis result is not allowed to be provided to the NF in the VPLMN; and
sending the rejection indication message to the NF in the VPLMN.

In some embodiments, the user consent information includes at least one of: the first identity information of the first UE, and further includes at least one of:
second identity information indicating the NF in the VPLMN, where the second identity information includes at least one of: identity information indicating an APP in the NF, service identity information indicating a service, and identity information indicating the NF;
information indicating a service purpose; and
a user consent result indicating whether the data and/or analysis result is allowed to be provided to HPLMN and/or VPLMN.

In some embodiments, the user consent result includes at least one of:
a first consent result, used to indicate that the data and/or analysis result in HPLMN is allowed to be provided to HPLMN;
a second consent result, used to indicate that the data and/or analysis result in VPLMN is allowed to be provided to VPLMN;
a third consent result, used to indicate that the analysis result in HPLMN is allowed to be provided to HPLMN and/or VPLMN, but the data in HPLMN is not allowed to be provided to HPLMN and/or VPLMN; and/or used to indicate that the analysis result in VPLMN is allowed to be provided to HPLMN and/or VPLMN, but the data in VPLMN is not allowed to be provided to HPLMN and/or VPLMN; and
a fourth consent result, used to indicate that the data and/or analysis result in HPLMN is allowed to be provided to HPLMN and/or VPLMN, and to indicate that the data and/or analysis result in VPLMN is allowed to be provided to HPLMN and/or VPLMN.

According to a third aspect of embodiments of the present disclosure, an information processing method is provided, which is performed by an H-NWDAF and includes:
receiving first request information sent by a V-NWDAF, where the first request information includes first identity information of at least one first UE, and the first request information is used to request data and/or analysis result of the first UE; and
sending second request information to a UDM, where the second request information includes the first identity information, and the second request information is used to request user consent information of the first UE.

In some embodiments, the first request information further includes at least one of:
roaming indication information, indicating that the first UE is a roaming UE;
network identity information, indicating a VPLMN in which the first UE roams and/or an HPLMN to which the first UE belongs; and
second identity information, where the second identity information includes at least one of: identity information indicating an APP in an NF; service identity information indicating a service, and identity information indicating the NF.

In some embodiments, sending the second request information to the UDM includes:
sending, if the user consent information of the first UE is not stored in the H-NWADF, the second request information to the UDM.

In some embodiments, the method includes: receiving second response information sent by the UDM, where the second response information includes the user consent information of the first UE.

In some embodiments, the method includes storing the user consent information of the first UE.

In some embodiments, the method includes at least one of:
determining, based on the user consent information, whether to allow the data and/or analysis result to be provided to the V-NWDAF and/or an NF in a VPLMN; and
determining, based on the user consent information and policy information, whether to allow the data and/or analysis result to be provided to the V-NWDAF and/or the NF in the VPLMN, where the policy information includes: operator policy information and/or regulation policy information.

In some embodiments, the method includes at least one of:
sending, in response to determining that the data and/or analysis result is allowed to be provided to the V-NWDAF and/or the NF in the VPLMN, first response information to the V-NWDAF, where the first response information includes: the data and/or analysis result of the first UE; and
sending, in response to determining that the data and/or analysis result is not allowed to be provided to the V-NWDAF and/or the NF in the VPLMN, rejection indication information to the V-NWDAF.

In some embodiments, the user consent information includes at least one of: the first identity information of the first UE, and further includes at least one of:
second identity information indicating an NF in a VPLMN, where the second identity information includes at least one of: identity information indicating an APP in the NF, service identity information indicating a service, and identity information indicating the NF;
information indicating a service purpose; and
a user consent result indicating whether the data and/or analysis result is allowed to be provided to HPLMN and/or VPLMN.

In some embodiments, the user consent result includes at least one of:
a first consent result, used to indicate that the data and/or analysis result in HPLMN is allowed to be provided to HPLMN;
a second consent result, used to indicate that the data and/or analysis result in VPLMN is allowed to be provided to VPLMN;
a third consent result, used to indicate that the analysis result in HPLMN is allowed to be provided to HPLMN and/or VPLMN, but the data in HPLMN is not allowed to be provided to HPLMN and/or VPLMN; and/or used to indicate that the analysis result in VPLMN is allowed to be provided to HPLMN and/or VPLMN, but the data in VPLMN is not allowed to be provided to HPLMN and/or VPLMN; and
a fourth consent result, used to indicate that the data and/or analysis result in HPLMN is allowed to be provided to HPLMN and/or VPLMN, and to indicate that the data and/or analysis result in VPLMN is allowed to be provided to HPLMN and/or VPLMN.

According to a fourth aspect of embodiments of the present disclosure, an information processing method is provided, which is performed by a UDM and includes:
receiving second request information sent by an NWDAF, where the second request information includes first identity information of a first UE, and the second request information is used to request user consent information of the first UE,
where the second request information is sent by the NWDAF after receiving first request information, and the first request information is used to request data and/or analysis result of the first UE.

In some embodiments, the NWDAF is a V-NWDAF or an H-NWDAF.

In some embodiments, the method includes: sending second response information to the NWDAF, where the second response information includes the user consent information of the first UE.

In some embodiments, the user consent information includes at least one of: the first identity information of the first UE, and further includes at least one of:
second identity information indicating an NF in a VPLMN, where the second identity information includes at least one of: identity information indicating an APP in the NF, service identity information indicating a service, and identity information indicating the NF;
information indicating a service purpose; and
a user consent result indicating whether the data and/or analysis result is allowed to be provided to HPLMN and/or VPLMN.

In some embodiments, the user consent result includes at least one of:
a first consent result, used to indicate that the data and/or analysis result in HPLMN is allowed to be provided to HPLMN;
a second consent result, used to indicate that the data and/or analysis result in VPLMN is allowed to be provided to VPLMN;
a third consent result, used to indicate that the analysis result in HPLMN is allowed to be provided to HPLMN and/or VPLMN, but the data in HPLMN is not allowed to be provided to HPLMN and/or VPLMN; and/or used to indicate that the analysis result in VPLMN is allowed to be provided to HPLMN and/or VPLMN, but the data in VPLMN is not allowed to be provided to HPLMN and/or VPLMN; and
a fourth consent result, used to indicate that the data and/or analysis result in HPLMN is allowed to be provided to HPLMN and/or VPLMN, and to indicate that the data and/or analysis result in VPLMN is allowed to be provided to HPLMN and/or VPLMN.

In some embodiments, the method includes storing at least one of:
user consent information of a second UE, where the second UE includes the first UE; and
policy information, where the policy information includes: operator policy information and/or regulation policy information.

According to a sixth aspect of embodiments of the present disclosure, an information processing method is provided, which is performed by communication devices. The communication devices include an NF in a VPLMN, a V-NWDAF, an H-NWDAF, and a UDM, and the information processing method include:
sending, by the NF in the VPLMN, first request information to the V-NWDAF, where the first request information includes first identity information of at least one first UE, and the first request information is used to request data and/or analysis result of the first UE;
sending, by the V-NWDAF, the first request information to the H-NWDF;
sending, by the H-NWDAF, second request information to the UDM, where the second request information includes the first identity information, and the second request information is used to request user consent information of the first UE.

In some embodiments, the method includes:
sending, by the UDM, second response information to the H-NWDF, where the second response information includes the user consent information of the first UE; and
determining, by the H-NWDAF based on the user consent information, whether to allow the data and/or analysis result to be provided to the V-NWDAF and/or the NF in the VPLMN; and sending, in response to determining that the data and/or analysis result is allowed to be provided to the V-NWDAF and/or the NF in the VPLMN, first response information to the V-NWDAF, where the first response information includes the data and/or analysis result of the first UE; and
sending, by the V-NWDAF, the first response information to the NF in the VPLMN.

According to a sixth aspect of embodiments of the present disclosure, an information processing apparatus is provided, including:
a first sending module, configured to send first request information to an NWDAF, thereby causing the NWDAF to send second request information to a UDM;
where the first request information includes first identity information of at least one first UE, and the first request information is used to request data and/or analysis result of the first UE; the second request information includes the first identity information, and the second request information is used to request user consent information of the first UE.

In some embodiments, the first request information further includes at least one of:
roaming indication information, indicating that the first UE is a roaming UE;
network identity information, indicating the VPLMN in which the first UE roams and/or an HPLMN to which the first UE belongs; and
second identity information of the NF in the VPLMN, where the second identity information includes at least one of: identity information indicating an APP in the NF; service identity information indicating a service, and identity information indicating the NF.

In some embodiments, the NWDAF is a V-NWDAF or an H-NWDAF.

In some embodiments, the apparatus includes: a first receiving module, configured to receive first response information sent by the V-NWDAF, where the first response information includes: the data and/or analysis result of the first UE;or
a first receiving module, configured to receive rejection indication information sent by the V-NWDAF, where the rejection indication information is used to indicate that the data and/or analysis result is not allowed to be provided to the NF in the VPLMN.

According to a seventh aspect of embodiments of the present disclosure, an information processing apparatus is provided, including:
a second receiving module, configured to receive first request information sent by an NF in a VPLMN, where the first request information includes first identity information of at least one first UE, and the first request information is used to request data and/or analysis result of the first UE; and
a second sending module, configured to send the first request information to an H-NWDAF, thereby causing the H-NWDAF to send second request information to a UDM, where the second request information includes the first identity information, and the second request information is used to request user consent information of the first UE.

In some embodiments, the first request information further includes at least one of:
roaming indication information, indicating that the first UE is a roaming UE;
network identity information, indicating the VPLMN in which the first UE roams and/or an HPLMN to which the first UE belongs; and
second identity information of the NF in the VPLMN, where the second identity information includes at least one of: identity information indicating an APP in the NF; service identity information indicating a service, and identity information indicating the NF.

In some embodiments, the apparatus includes: a first processing module, configured to determine, based on policy information, that the NF in the VPLMN is allowed to request the data and/or analysis result, where the policy information includes: operator policy information and/or regulation policy information; and
a second sending module, configured to send the first request information to the H-NWDAF.

In some embodiments, the second receiving module is configured to receive first response information sent by the H-NWDAF, where the first response information includes: the data and/or analysis result of the first UE; and
the second sending module is configured to send the first response information to the NF in the VPLMN.

In some embodiments, the second receiving module is configured to receive rejection indication information sent by the H-NWDAF, where the rejection indication information is used to indicate that the data and/or analysis result is not allowed to be provided to the NF in the VPLMN; and
the second sending module is configured to send the rejection indication message to the NF in the VPLMN.

In some embodiments, the user consent information includes at least one of: the first identity information of the first UE, and further includes at least one of:
second identity information indicating the NF in the VPLMN, where the second identity information includes at least one of: identity information indicating an APP in the NF, service identity information indicating a service, and identity information indicating the NF;
information indicating a service purpose; and
a user consent result indicating whether the data and/or analysis result is allowed to be provided to HPLMN and/or VPLMN.

In some embodiments, the user consent result includes at least one of:
a first consent result, used to indicate that the data and/or analysis result in HPLMN is allowed to be provided to HPLMN;
a second consent result, used to indicate that the data and/or analysis result in VPLMN is allowed to be provided to VPLMN;
a third consent result, used to indicate that the analysis result in HPLMN is allowed to be provided to HPLMN and/or VPLMN, but the data in HPLMN is not allowed to be provided to HPLMN and/or VPLMN; and/or used to indicate that the analysis result in VPLMN is allowed to be provided to HPLMN and/or VPLMN, but the data in VPLMN is not allowed to be provided to HPLMN and/or VPLMN; and
a fourth consent result, used to indicate that the data and/or analysis result in HPLMN is allowed to be provided to HPLMN and/or VPLMN, and to indicate that the data and/or analysis result in VPLMN is allowed to be provided to HPLMN and/or VPLMN.

According to an eighth aspect of embodiments of the present disclosure, an information processing apparatus is provided, including:
a third receiving module, configured to receive first request information sent by a V-NWDAF, where the first request information includes first identity information of at least one first UE, and the first request information is used to request data and/or analysis result of the first UE; and
a third sending module, configured to send second request information to a UDM, where the second request information includes the first identity information, and the second request information is used to request user consent information of the first UE.

In some embodiments, the first request information further includes at least one of:
roaming indication information, indicating that the first UE is a roaming UE;
network identity information, indicating a VPLMN in which the first UE roams and/or an HPLMN to which the first UE belongs; and
second identity information, where the second identity information includes at least one of: identity information indicating an APP in an NF; service identity information indicating a service, and identity information indicating the NF.

In some embodiments, the third sending module is configured to send, if the user consent information of the first UE is not stored in the H-NWADF, the second request information to the UDM.

In some embodiments, the third receiving module is configured to receive second response information sent by the UDM, where the second response information includes the user consent information of the first UE.

In some embodiments, the apparatus includes a second processing module, configured to store the user consent information of the first UE.

In some embodiments, the second processing module is configured to perform at least one of:
determining, based on the user consent information, whether to allow the data and/or analysis result to be provided to the V-NWDAF and/or an NF in a VPLMN; and
determining, based on the user consent information and policy information, whether to allow the data and/or analysis result to be provided to the V-NWDAF and/or the NF in the VPLMN, where the policy information includes: operator policy information and/or regulation policy information.

In some embodiments, the third sending module is configured to perform at least one of:
sending, in response to determining that the data and/or analysis result is allowed to be provided to the V-NWDAF and/or the NF in the VPLMN, first response information to the V-NWDAF, where the first response information includes: the data and/or analysis result of the first UE; and
sending, in response to determining that the data and/or analysis result is not allowed to be provided to the V-NWDAF and/or the NF in the VPLMN, rejection indication information to the V-NWDAF.

In some embodiments, the user consent information includes at least one of: the first identity information of the first UE, and further includes at least one of:
second identity information indicating an NF in a VPLMN, where the second identity information includes at least one of: identity information indicating an APP in the NF, service identity information indicating a service, and identity information indicating the NF;
information indicating a service purpose; and
a user consent result indicating whether the data and/or analysis result is allowed to be provided to HPLMN and/or VPLMN.

In some embodiments, the user consent result includes at least one of:
a first consent result, used to indicate that the data and/or analysis result in HPLMN is allowed to be provided to HPLMN;
a second consent result, used to indicate that the data and/or analysis result in VPLMN is allowed to be provided to VPLMN;
a third consent result, used to indicate that the analysis result in HPLMN is allowed to be provided to HPLMN and/or VPLMN, but the data in HPLMN is not allowed to be provided to HPLMN and/or VPLMN; and/or used to indicate that the analysis result in VPLMN is allowed to be provided to HPLMN and/or VPLMN, but the data in VPLMN is not allowed to be provided to HPLMN and/or VPLMN; and
a fourth consent result, used to indicate that the data and/or analysis result in HPLMN is allowed to be provided to HPLMN and/or VPLMN, and to indicate that the data and/or analysis result in VPLMN is allowed to be provided to HPLMN and/or VPLMN.

According to a ninth aspect of embodiments of the present disclosure, an information processing apparatus is provided, including:
a fourth receiving module, configured to receive second request information sent by an NWDAF, where the second request information includes first identity information of a first UE, and the second request information is used to request user consent information of the first UE,
where the second request information is sent by the NWDAF after receiving first request information, and the first request information is used to request data and/or analysis result of the first UE.

In some embodiments, the NWDAF is a V-NWDAF or an H-NWDAF.

In some embodiments, the apparatus includes: a fourth sending module, configured to send second response information to the NWDAF, where the second response information includes the user consent information of the first UE.

In some embodiments, the user consent information includes at least one of: the first identity information of the first UE, and further includes at least one of:
second identity information indicating an NF in a VPLMN, where the second identity information includes at least one of: identity information indicating an APP in the NF, service identity information indicating a service, and identity information indicating the NF;
information indicating a service purpose; and
a user consent result indicating whether the data and/or analysis result is allowed to be provided to HPLMN and/or VPLMN.

In some embodiments, the user consent result includes at least one of:
a first consent result, used to indicate that the data and/or analysis result in HPLMN is allowed to be provided to HPLMN;
a second consent result, used to indicate that the data and/or analysis result in VPLMN is allowed to be provided to VPLMN;
a third consent result, used to indicate that the analysis result in HPLMN is allowed to be provided to HPLMN and/or VPLMN, but the data in HPLMN is not allowed to be provided to HPLMN and/or VPLMN; and/or used to indicate that the analysis result in VPLMN is allowed to be provided to HPLMN and/or VPLMN, but the data in VPLMN is not allowed to be provided to HPLMN and/or VPLMN; and
a fourth consent result, used to indicate that the data and/or analysis result in HPLMN is allowed to be provided to HPLMN and/or VPLMN, and to indicate that the data and/or analysis result in VPLMN is allowed to be provided to HPLMN and/or VPLMN.

In some embodiments, the apparatus includes a third processing module, configured to store at least one of:
user consent information of a second UE, where the second UE includes the first UE; and
policy information, where the policy information includes: operator policy information and/or regulation policy information.

According to a tenth aspect of embodiments of the present disclosure, a communication device is provided, including:
a processor; and
a memory used to store instructions executable by the processor,
where the processor, upon running the executable instructions, is configured to implement the information processing method according to any embodiment of the present disclosure.

According to an eleventh aspect of embodiments of the present disclosure, a computer storage medium is provided. The computer storage medium stores a computer executable program, which, when being executed by a processor, is used for implementing the information processing method according to any embodiment of the present disclosure.

The technical solutions according to some embodiments of the present disclosure may include the following beneficial effects.

In an example of this disclosure, the NF in the VPLMN sends the first request information to the NWDAF, thereby causing the NWDAF to send the second request information to the UDM; where the first request information includes the first identity information of at least one first UE, and the first request information is used to request data and/or analysis result of the first UE; the second request information includes the first identity information, and the second request information is used to request user consent information of the first UE. In this way, after obtaining the user consent information of the first UE, the NWDAF can be facilitated to determine whether to send the data and/or analysis result of the first UE to the NF in the VPLMN. Accordingly, in the roaming scenario, the NF in the VPLMN can obtain the data and/or analysis result of the first UE from the NWDAF. On the one hand, the interaction of data and/or analysis result can be realized in the roaming scenario; and on the other hand, the interaction of data and/or analysis result in the roaming scenario can be implemented based on the user consent information, thereby reducing the risk of privacy (e.g., the data and/or analysis result) being leaked in the roaming scenario.

It should be understood that the above general description and the following detailed description are only exemplary and explanatory, and do not limit the embodiments of the present disclosure.

### BRIEF DESCRIPTION OF THE DRAWINGS

FIG. 1 is a schematic structural diagram of a wireless communication system according to an exemplary embodiment.
FIG. 2 is a schematic diagram of an information processing method according to an exemplary embodiment.
FIG. 3 is a schematic diagram of an information processing method according to an exemplary embodiment.
FIG. 4 is a schematic diagram of an information processing method according to an exemplary embodiment.
FIG. 5 is a schematic diagram of an information processing method according to an exemplary embodiment.
FIG. 6 is a schematic diagram of an information processing method according to an exemplary embodiment.
FIG. 7 is a schematic diagram of an information processing method according to an exemplary embodiment.
FIG. 8 is a schematic diagram of an information processing method according to an exemplary embodiment.
FIG. 9 is a schematic diagram of an information processing method according to an exemplary embodiment.
FIG. 10 is a schematic diagram of an information processing method according to an exemplary embodiment.
FIG. 11 is a block diagram of an information processing apparatus according to an exemplary embodiment.
FIG. 12 is a block diagram of an information processing apparatus according to an exemplary embodiment.
FIG. 13 is a block diagram of an information processing apparatus according to an exemplary embodiment.
FIG. 14 is a block diagram of an information processing apparatus according to an exemplary embodiment.
FIG. 15 is a block diagram of a UE according to an exemplary embodiment.
FIG. 16 is a block diagram of a base station according to an exemplary embodiment.

### DETAILED DESCRIPTION

Exemplary embodiments will be described in detail herein, examples of which are illustrated in the accompanying drawings. When the following description refers to the drawings, the same numbers in different drawings refer to the same or similar elements unless otherwise indicated. The implementations described in the following exemplary embodiments do not represent all implementations consistent with embodiments of this disclosure. Rather, they are merely examples of apparatuses and methods consistent with some aspects of embodiments of this disclosure.

The terminologies used in the embodiments of this disclosure are for the purpose of describing specific embodiments only and are not intended to limit the embodiments of this disclosure. As used in the embodiments of this disclosure and the appended claims, the singular forms "a", "an" and "the" are intended to include the plural forms as well, unless the context clearly dictates otherwise. It will also be understood that the term "and/or" as used herein refers to and includes any and all possible combinations of one or more of the associated listed items.

It should be understood that although the terms "first", "second", "third", etc. may be used to describe various information in the embodiments of this disclosure, the information should not be limited to these terms. These terms are only used to distinguish information of the same type from each other. For example, without departing from the scope of the embodiments of this disclosure, the first information may also be called second information, and similarly, the second information may also be called first information. Depending on the context, the word "if" as used herein may be interpreted as "when" or "while" or "in response to determining that..."

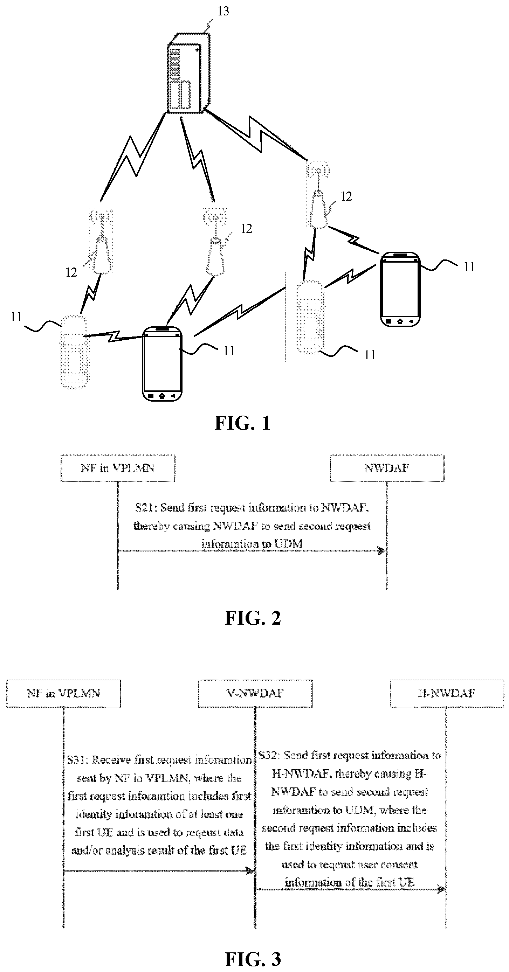

Referring to FIG. 1, which shows a schematic structural diagram of a wireless communication system according to an embodiment of this disclosure. As shown in FIG. 1, the wireless communication system is a communication system based on cellular mobile communication technology, and may include: several UEs 110 and several base stations 120.

In some embodiments, UE 110 may be a device that provides voice and/or data connectivity to the user. UE 110 can communicate with one or more core networks via a radio access network (RAN), and UE 110 can be an Internet of things (IoT) UE, such as a sensor device, a mobile phone (or called "cellular" phone), and a computer with an IoT UE. For example, it may be a fixed, portable, pocket, hand-held, computer built-in, or vehicle-mounted device, such as station (STA), subscriber unit, subscriber station, mobile station, mobile, remote station, access point, remote terminal, access terminal, user terminal, user agent, user device, or UE. Alternatively, UE 110 may also be equipment of an unmanned aerial vehicle. Alternatively, UE 110 may also be a vehicle-mounted device, for example, a trip computer with a wireless communication function, or a wireless user device connected externally to the trip computer. Alternatively, UE 110 may also be a roadside device, for example, a street lamp, a signal lamp, or other roadside devices with a wireless communication function.

The base station 120 may be a network side device in the wireless communication system. In some embodiments, the wireless communication system may be the 4th generation mobile communication (4G) system, also known as the LTE (Long Term Evolution) system. Alternatively, the wireless communication system may also be the 5G system, also known as NR (new radio) system or 5G NR system. Alternatively, the wireless communication system may also be a next-generation system of the 5G system. In some embodiments, the access network in the 5G system can be called NG-RAN (New Generation-Radio Access Network).

In some embodiments, the base station 120 may be an eNB (evolved node-B) adopted in 4G system. Alternatively, the base station 120 may also be a gNB adopting a centralization-distributed architecture in 5G system. When the base station 120 adopts the centralization-distributed architecture, it generally includes a CU (central unit) and at least two DUs (distributed units). The CU is provided with a PDCP (packet data convergence protocol) layer, an RLC (radio link layer) protocol layer, a MAC (media access control) layer protocol stack; and the DU is provided with a PHY (physical) layer protocol stack. Embodiments of the disclosure do not limit specific implementation of the base station 120.

A wireless connection may be established between the base station 120 and UE 110 through a wireless air interface. In different embodiments, the wireless air interface is a wireless air interface based on the 4G standard; alternatively, the wireless air interface is a wireless air interface based on the 5G standard, for example, a new air interface; alternatively, the wireless air interface may also be a wireless air interface based on a technical standard of a next-generation mobile communication network based on 5G.

In some embodiments, an end-to-end (E2E) connection may also be established between UEs 110, for example, in vehicle-to-vehicle (V2V) communication, vehicle to infrastructure (V2I) communication, and vehicle to pedestrian (V2P) communication of the vehicle to everything (V2X).

Here, the above UE can be considered as the terminal device in the following embodiments.

In some embodiments, the above-mentioned wireless communication system may also include a network management device 130.

Several base stations 120 are connected to the network management device 130 respectively. The network management device 130 may be a core network device in the wireless communication system. For example, the network management device 130 may be a mobility management entity (MME) in an evolved packet core (EPC) network. Alternatively, the network management device may also be other core network devices, such as serving gateway (SGW), public data network gateway (PGW), policy and charging rules function (PCRF), home subscriber server (HSS), or the like. Embodiments of the present disclosure do not limit the implementation form of the network management device 130.

In order to facilitate understanding by those skilled in the art, embodiments of the present disclosure enumerate multiple implementations to clearly describe the technical solutions according to some embodiments of the present disclosure. However, those skilled in the art can understand that the multiple implementations provided in the embodiments of the present disclosure can be implemented alone or in combination with the methods according to other embodiments of the present disclosure; and can also be implemented alone or in combination with some methods in other related art, which are not limited by the embodiments of the present disclosure.

It should be noted that when multiple executors are involved in the embodiments of the present disclosure, when one executor sends a certain transmission to another executor, it may mean that the one executor directly sends the transmission to another executor; or it may mean that the one executor sends the transmission to another executor through any other device, which is not limited by the embodiments of the present disclosure.

In order to better understand the technical solution described in any embodiment of the present disclosure, first, a partial description of the related art is provided.

In an embodiment, VPLMN-specific user consent is saved and maintained by UDM, and the user consent may contain the following parameters:
identity information of UE, which may be the user subscription permanent identifier (SUPI); that is, "UE ID: refers to a subscriber, can be SUPI;"
data processor ID, which indicates a service provider that provides data analytics service to UE, and may be identity information of PLMN; for example, in the roaming scenario, identity information of VPLMN is to be maintained together with identity information of HPLMN; that is, "Data Processor ID: refers to a service provider who provides data analytics service for the UE, can be PLMN ID. In the roaming scenario, the VPLMN ID needs to be maintained with HPLMN ID;"
purpose of data processing: data analytics service, which may be a service operation name, where specific analysis identity information is used as input of the service operation name; that is, "Purpose of Data Processing: refers to a data analytics service, can be service operation name (e.g., Nnwdaf_AnalyticsSubscription_Subscribe), with specific analytics ID input;"
user consent result: whether allow the data processor to process data according to the purpose of data processing; in the roaming scenario, if UE agrees to open the data or analysis to HPLMN or VPLMN, the user consent result can be classified as follows:
   processed only in HPLMN: data collected in the home network can only be processed in HPLMN, which means that the collected data and/or analysis can only be provided in HPLMN to the consumer NF in HPLMN; that is, "Only process in the HPLMN: the collected data in the home network can only be processed in the HPLMN, which means the collected data and/or analytics result can only be provided to the Consumer NF in the HPLMN;"
   processed only in the VPLMN: data collected in the visited network can only be processed in VPLMN, which means that the collected data and/or analysis result can only be provided to the consumer NF in VPLMN; that is, "Only process in the VPLMN: the collected data in the visited network can only be processed in the VPLMN, which means the collected data and/or analytics result can only be provided to the Consumer NF in the VPLMN;"
   provided to VPLMN and HPLMN: based on the operator policy and regulation policy, the analysis result in the visited network or home network can be provided to HPLMN and/or VPLMN; however, data collected in the visited network or home network cannot be provided to HPLMN and/or VPLMN; that is, "Provide to the VPLMN and HPLMN: the analytics result in the visited network or home network can be provided to the HPLMN or VPLMN based on the operator policy and regulation policy. But the input collected data in the visited network or home network cannot be provided to the HPLMN or VPLMN;"
   processed in VPLMN and HPLMN: based on the operator policy and regulation policy, data collected in the visited network or home network can be processed in VPLMN and/or HPLMN, which means that the collected data and analysis result can be transmitted between VPLMN and/or HPLMN; that is, "Process in the VPLMN and HPLMN: the collected data in the visited network or home network can be processed in the VPLMN or HPLMN based on the operator policy and regulation policy, which means both the collected data and the analytics result can be transmitted between VPLMN and HPLMN."

After combining the foregoing parameters, the corresponding subscriber can indicate user consent results regarding a specific network analytics service.

As shown in FIG. 2, some embodiments of the present disclosure provide an information processing method, which is performed by NF in VPLMN and includes the followings.

In step S21, first request information is sent to NWDAF, thereby causing NWDAF to send second request information to UDM.

Herein, the first request information includes first identity information of at least one first UE, and the first request information is used to request data and/or analysis result of the first UE; the second request information includes the first identity information, and the second request information is used to request user consent information of the first UE.

The first UE may be a roaming UE. The first UE may be various mobile terminals. For example, the first UE may be, but is not limited to, a mobile phone, a computer, a server, a wearable device, a vehicle-mounted terminal, a roadside unit (RSU), a game control platform, a multimedia device, or the like.

NWDAF, NF and UDM described in the following embodiments may be logical nodes or functions that can be flexibly deployed in the communication network. For example, NWDAF and UDM may be logical nodes or functions in the core network device. Here, NWDAF is V-NWDAF or H-NWDAF.

NF in VPLMN may be any one or multiple NFs in VPLMN. For example, NF in VPLMN may be NWDAF, access and mobility management function (AMF), policy control function (PCF), or the like in VPLMN. For another example, NF in VPLMN may be a consumer NF in VPLMN.

The at least one first UE may be: one first UE or multiple first UEs. In the embodiments of the present disclosure, multiple means two or more.

The first identity information of the first UE may be used to uniquely identify the first UE. For example, the first identity information may be a network layer identifier or an application layer identifier. The network layer identifier may be, but is not limited to, at least one of the following: subscription concealed identifier (SUCI), globally unique temporary UE identity (GUTI) and SUPI. For another example, the first identity information may be, but is not limited to, the physical address of the UE. For another example, the first identity information may also be, but is not limited to, a code or index negotiated between the operator and the UE or between the network device and the UE.

Here, the user consent information of the first user is used to determine whether to provide the data and/or analysis result of the first UE to NF in VPLMN.

In some embodiments, the first request information is used to request data and/or analysis result of the first UE in VPLMN and/or HPLMN. Here, the data may be any kind of data collected in VPLMN and/or HPLMN, for example, trajectory information, Internet access data, or the like of the first UE in VPLMN. Here, the analysis result may be the result of data processing by any function or logical node in VPLMN and/or HPLMN, for example, an analysis result of analyzing the trajectory information of the first UE or an analysis result of analyzing the Internet access data of the first UE.

In some embodiments, step S21 may include: NF in VPLMN sends the first request information to V-NWDAF, thereby causing V-NWDAF to send the second request information. This allows V-NWDAF to request the user consent information of the first UE.

In some other embodiments, step S21 may include: NF in VPLMN sends the first request information to V-NWDAF, and V-NWDAF sends the first request information to H-NWDAF, thereby causing H-NWDAF to send the second request information. This allows H-NWDAF to request the user consent information of the first UE.

In some other embodiments, step S21 may include: data and/or analysis requirements are generated at V-NWDAF, and these messages are transparently transmitted to V-NWDAF, thereby causing V-NWDAF to send the second request message. This allows V-NWDAF to request the user consent information of the first UE.

In some other embodiments, step S21 may include: data and/or analysis requirements are generated at V-NWDAF, these messages are transparently transmitted to V-NWDAF, and V-NWDAF sends the first request information to H-NWDAF, thereby causing H-NWDAF to send the second request information. This allows H-NWDAF to request the user consent information of the first UE.

In some embodiments, the user consent information includes at least one of the following: first identity information of the first UE, and the user consent information further includes at least one of the following:
second identity information indicating NF in VPLMN, where the second identity information includes at least one of: identity information indicating an APP in NF, service identity information indicating a service, and identity information indicating NF;
information indicating a service purpose; and
a user consent result indicating whether the data and/or analysis result is allowed to be provided to HPLMN and/or VPLMN.

Here, the identity information of the APP in NF is used to uniquely identify the APP. The service identity information of a service is used to uniquely identify the service. The identity information of NF is used to uniquely identify NF; and the identity information of NF may be, but is not limited to, a physical address, an index, or a code.

In some embodiments, the user consent result includes at least one of the following:
a first consent result, used to indicate that the data and/or analysis result in HPLMN is allowed to be provided to HPLMN;
a second consent result, used to indicate that the data and/or analysis result in VPLMN is allowed to be provided to VPLMN;
a third consent result, used to indicate that the analysis result in HPLMN is allowed to be provided to HPLMN and/or VPLMN, but the data in HPLMN is not allowed to be provided to HPLMN and/or VPLMN; and/or used to indicate that the analysis result in VPLMN is allowed to be provided to HPLMN and/or VPLMN, but the data in VPLMN is not allowed to be provided to HPLMN and/or VPLMN; and
a fourth consent result, used to indicate that the data and/or analysis result in HPLMN is allowed to be provided to HPLMN and/or VPLMN, and to indicate that the data and/or analysis result in VPLMN is allowed to be provided to HPLMN and/or VPLMN.

Here, providing data and/or analysis result to HPLMN may refer to providing data and/or analysis result to any function or logical node or network element in HPLMN. For example, the first consent result may be used to indicate consent to provide data and/or analysis result in HPLMN to a consumer NF in HPLMN.

Here, providing data and/or analysis result to VPLMN may refer to providing data and/or analysis result to any function or logical node or network element in VPLMN. For example, the first consent result is used to indicate consent to provide data and/or analysis result in VPLMN to the consumer NF in VPLMN.

In some other embodiments, the user consent information includes: first identity information of the second UE, where the second UE at least includes the first UE. In this way, the user consent information may be information related to user consent of various roaming UEs.

In an example of this disclosure, NF in VPLMN sends the first request information to NWDAF, thereby causing NWDAF to send the second request information to UDM; where the first request information includes the first identity information of at least one first UE, and the first request information is used to request data and/or analysis result of the first UE;the second request information includes the first identity information, and the second request information is used to request user consent information of the first UE. In this way, after obtaining the user consent information of the first UE, NWDAF can be facilitated to determine whether to send the data and/or analysis result of the first UE to NF in VPLMN. Accordingly, in the roaming scenario, NF in VPLMN can obtain the data and/or analysis result of the first UE from NWDAF. On the one hand, the interaction of data and/or analysis result can be realized in the roaming scenario; and on the other hand, the interaction of data and/or analysis result in the roaming scenario can be implemented based on the user consent information, thereby reducing the risk of privacy (e.g., the data and/or analysis result) being leaked in the roaming scenario.

In some embodiments, the first request information further includes at least one of the following:
roaming indication information, indicating that the first UE is a roaming UE;
network identity information, indicating VPLMN in which the first UE roams and/or an HPLMN to which the first UE belongs; and
second identity information of NF in VPLMN, where the second identity information includes at least one of: identity information indicating an APP in NF; service identity information indicating a service, and identity information indicating NF.

In some embodiments, the second request information further includes at least one of the following:
roaming indication information, indicating that the first UE is a roaming UE;
network identity information, indicating VPLMN in which the first UE roams and/or an HPLMN to which the first UE belongs; and
second identity information of NF in VPLMN, where the second identity information includes at least one of: identity information indicating an APP in NF; service identity information indicating a service, and identity information indicating NF.

In this way, in some embodiments of the present disclosure, NWDAF can know that the first UE is a roaming UE through the roaming indication information; and/or can obtain more accurate user consent information of the first UE through the network identity information and NF in VPLMN.

Some embodiments of the present disclosure provide an information processing method, performed by NF in VPLMN and includes: receiving first response information sent by V-NWDAF, where the first response information includes data and/or analysis result of a first UE.

Here, the first response information is sent after NWDAF determines to provide the data and/or analysis result of the first UE to NF in VPLMN. The first response information may be sent by H-NWDAF to V-NWDAF, and forwarded or transparently transmitted by V-NWDAF to NF in VPLMN.

In some embodiments of the present disclosure, NF in VPLMN can successfully obtain the data and/or analysis result of the first UE by receiving the first response information sent by V-NWDAF.

Some embodiments of the present disclosure provide an information processing method, performed by NF in VPLMN and includes: receiving rejection indication information sent by V-NWDAF, where the rejection indication information is used to indicate that data and/or analysis result is not allowed to be provided to NF in VPLMN.

Here, the rejection indication information indicates that NWDAF determines that the data and/or analysis result of the first UE is not allowed to be provided to VPLMN. NWDAF includes H-NWDAF or V-NWDAF.

In some embodiments of the present disclosure, NF in VPLMN may determine that it is not allowed to obtain the data and/or analysis result of the first UE by receiving the rejection indication information sent by V-NWDAF.

It should be noted that those skilled in the art can understand that the methods provided in the embodiments of the present disclosure can be implemented alone or together with some methods in other embodiments of the present disclosure or some methods in related art.

The following information processing method is performed by V-NWDAF, which is similar to the above description of the information processing method performed by NF in VPLMN. Moreover, for those technical details not disclosed in the information processing method embodiments performed by V-NWDAF, the exemplary description of the information processing method performed by NF in VPLMN can be referred to, which will not be described in detail here.

As shown in FIG. 3, some embodiments of the present disclosure provide an information processing method, which is performed by V-NWDAF and includes the followings.

In step S31, first request information sent by NF in VPLMN is received, where the first request information includes first identity information of at least one first UE, and the first request information is used to request data and/or analysis result of the first UE.

In step S32, the first request information is sent to H-NWDAF, thereby causing H-NWDAF to send second request information to UDM, where the second request information includes the first identity information, and the second request information is used to request user consent information of the first UE.

In some embodiments of the present disclosure, the first request information and the second request information may respectively be the first request information and the second request information in the above embodiments; the first identity information and the user consent information may respectively be the first identity information and the user consent information in the above embodiments.

Exemplarily, both the first request information and the second request information may include at least one of the following:
roaming indication information, indicating that the first UE is a roaming UE;
network identity information, indicating VPLMN in which the first UE roams and/or an HPLMN to which the first UE belongs; and
second identity information of NF in VPLMN, where the second identity information includes at least one of: identity information indicating an APP in NF; service identity information indicating a service, and identity information indicating NF.

Exemplarily, the first request information is used to request data and/or analysis result of the first UE in VPLMN and/or HPLMN.

Exemplarily, the first identity information may be, but is not limited to, at least one of the following: SUCI, GUTI, SUPI, physical address, etc.

Exemplarily, the user consent information includes at least one of the following: first identity information of the first UE, and the user consent information further includes at least one of the following:
second identity information indicating NF in VPLMN, where the second identity information includes at least one of: identity information indicating an APP in NF, service identity information indicating a service, and identity information indicating NF;
information indicating a service purpose; and
a user consent result indicating whether the data and/or analysis result is allowed to be provided to HPLMN and/or VPLMN.

Exemplarily, the user consent result includes at least one of the following:
a first consent result, used to indicate that the data and/or analysis result in HPLMN is allowed to be provided to HPLMN;
a second consent result, used to indicate that the data and/or analysis result in VPLMN is allowed to be provided to VPLMN;
a third consent result, used to indicate that the analysis result in HPLMN is allowed to be provided to HPLMN and/or VPLMN, but the data in HPLMN is not allowed to be provided to HPLMN and/or VPLMN; and/or used to indicate that the analysis result in VPLMN is allowed to be provided to HPLMN and/or VPLMN, but the data in VPLMN is not allowed to be provided to HPLMN and/or VPLMN; and
a fourth consent result, used to indicate that the data and/or analysis result in HPLMN is allowed to be provided to HPLMN and/or VPLMN, and to indicate that the data and/or analysis result in VPLMN is allowed to be provided to HPLMN and/or VPLMN.

In this way, in some embodiments of the present disclosure, when V-NWDAF receives the first request information sent by NF in VPLMN, it sends the first request information to H-NWDAF, thereby causing H-NWADF to obtain the user consent information of the first UE. Therefore, it is beneficial for H-NWDAF to obtain the user information of the first UE in the roaming scenario, and determine, based on the user consent information of the first UE, whether to send the data and/or analysis result of the first UE to NF in VPLMN. In this way, on the one hand, the interaction of data and/or analysis result can be realized in the roaming scenario; and on the other hand, the interaction of data and/or analysis result in the roaming scenario can be implemented based on the user consent information, thereby reducing the risk of privacy (e.g., the data and/or analysis result) being leaked in the roaming scenario.

In some embodiments, sending the first request information to H-NWDAF in step S32 includes:
sending, if it is determined that NF in VPLMN is allowed to request data and/or analysis result based on policy information, the first request information to H-NWDAF, where the policy information includes: operator policy information and/or regulation policy information.

Some embodiments of the present disclosure provide an information processing method, performed by V-NWDAF and includes: determining to allow NF in VPLMN to request data and/or analysis result based on policy information, where the policy information includes: operator policy information and/or regulation policy information; and
sending the first request information to H-NWDAF.

Here, the operator policy information may be information stipulated by the operator as to whether it is allowed to request data and/or analysis result. For example, operator regulations do not allow Region A to request data and/or analysis result. For another example, Operator A does not allow Operator B to request data and/or analysis result.

Here, the regulation policy information may be, but is not limited to, national and/or regional regulation policy information. For example, the regulation policy information indicates that Region A is not allowed to request data and/or analysis result, and/or indicates that Region A is allowed to request data and/or analysis result.

In this way, it can be determined through the policy information whether NF in VPLMN is allowed to request data and/or analysis result. When NF in VPLMN is allowed to request data and/or analysis result, the first request information is sent to H-NWDAF to request the data and/or analysis of the first UE, thereby further reducing the risk of privacy information (e.g., data and/or analysis result) being leaked.

Some embodiments of the present disclosure provide an information processing method, performed by V-NWDAF and includes:
receiving the first response information sent by H-NWDAF, where the first response information includes: the data and/or analysis result of the first UE; and
sending the first response information to NF in VPLMN.

In this way, when the first response information sent by H-NWDAF is received, the first response information is sent to NF in VPLMN, thereby realizing functional interaction of the first UE's data and/or analysis result in HPLMN and VPLMN.

Some embodiments of the present disclosure provide an information processing method, performed by V-NWDAF and includes:
receiving rejection indication information sent by H-NWDAF, where the rejection indication information is used to indicate that data and/or analysis result is not allowed to be provided to NF in VPLMN; and
sending a rejection indication message to NF in VPLMN.

In this way, when H-NWDAF determines that it is not allowed to provide data and/or analysis result to NF in VPLMN, it can send the rejection indication information to NF in VPLMN through V-NWDAF to notify NF in VPLMN of being not allowed to be provided with the data and/or analysis result.

For the above embodiments, specific reference may be made to the descriptions of the first UE and/or the second UE side and/or the first network node and/or the third network node, which will not be repeated here.

It should be noted that those skilled in the art can understand that the methods provided in the embodiments of the present disclosure can be performed alone or together with some methods in other embodiments of the present disclosure or some methods in related art.

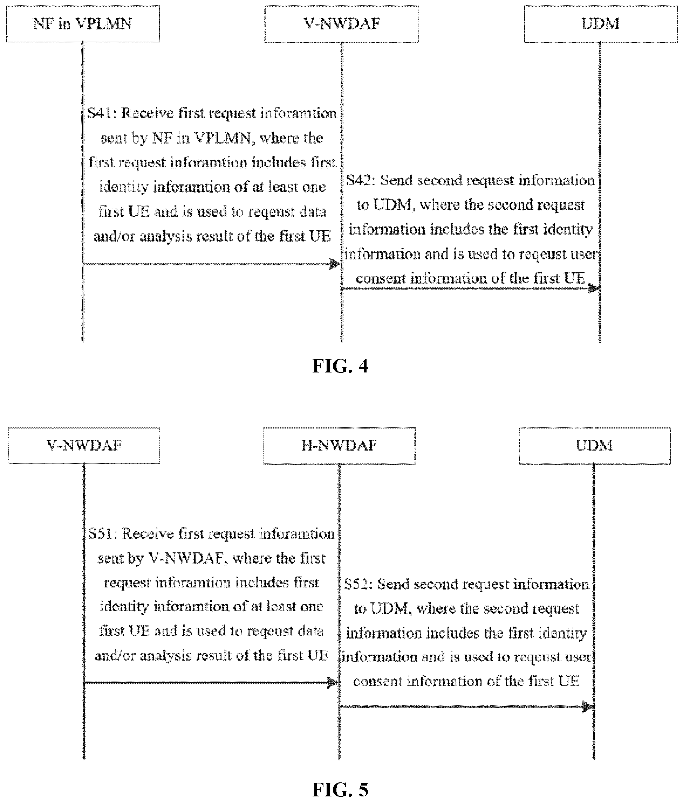

As shown in FIG. 4, some embodiments of the present disclosure provide an information processing method, which is performed by V-NWDAF and includes the followings.

In step S41, first request information sent by NF in VPLMN is received, where the first request information includes first identity information of at least one first UE, and the first request information is used to request data and/or analysis result of the first UE.

In step S42, second request information is sent to UDM, where the second request information includes the first identity information, and the second request information is used to request user consent information of the first UE.

In some embodiments of the present disclosure, the first request information and the second request information may respectively be the first request information and the second request information in the above embodiments; the first identity information and the user consent information may respectively be the first identity information and the user consent information in the above embodiments.

Some embodiments of the present disclosure provide an information processing method, performed by V-NWDAF and includes: receiving second response information sent by UDM, where the second response information includes: user consent information of the first UE.

After receiving the first request information, V-NWDAF may directly send the second request information to UDM to request the user consent information of the first UE. Moreover, the second response information can be received through V-NWDAF to receive the user consent information of the first UE sent by UDM. In this way, the user consent information of the first UE can be successfully obtained through V-NWDAF.

For example, V-NWDAF may send a Nudm_SDM_GetRequest message to UDM through SEPP in VPLMN, where the Nudm_SDM_GetRequest message carries the first identity information of the first UE and is used to request the user consent information of the first UE. V-NWDAF may receive an Nudm_SDM_Get response message sent by UDM through SEPP in HPLMN, where the Nudm_SDM_Get response message includes the user consent information of the first UE. Here, the SEPP device is a proxy device for interconnection between different operator networks, and the signaling interaction between NF device in the core network and NF in the roaming network can be forwarded through the SEPP device.

In some embodiments, sending the second request information to UDM in step S42 includes: sending the second request information to UDM based on the fact that there is no user consent information of the first UE in V-NWDAF.

Some embodiments of the present disclosure provide an information processing method, performed by V-NWDAF and includes: sending second request information to UDM based on the fact that there is no user consent information of the first UE in V-NWDAF.

In some embodiments of the present disclosure, only when there is no user consent information of the first UE in V-NWDAF, the second request information is sent to UDM to obtain the user consent information of the first UE, thereby saving signaling overhead and the power consumption of NF (e.g., V-NWDAF or UDM) in respective networks.

Some embodiments of the present disclosure provide an information processing method, performed by V-NWDAF and includes: storing user consent information of the first UE. In this way, when V-NWDAF obtains the user consent information of the first UE, it can store the user consent information of the first UE. Subsequently, when NF in VPLMN is to obtain the user consent information of the first UE from V-NWDAF, it is conducive to provide the user consent information of the first UE to NF in VPLMN without obtaining the same from UDM.

Some embodiments of the present disclosure provide an information processing method, performed by V-NWDAF and includes: upon determining the data and/or analysis result is allowed to be provided to V-NWDAF and/or NF in VPLMN based on the user consent information, sending the first request information to H-NWDAF; and
receiving first response information sent by H-NWDAF, where the first response information includes the data and/or analysis result of the first UE.

Here, upon determining the data and/or analysis result is allowed to be provided to V-NWDAF and/or NF in VPLMN based on the user consent information, it may include: based on the user consent information and policy information, it is determined that the data and/or analysis result is allowed to be provided to V-NWDAF and/or NF in VPLMN, where the policy information includes operator policy information and/or regulation policy information.

In this way, in some embodiments of the present disclosure, when V-NWDAF obtains the first user consent information and then sends the first request information to H-NWDAF, H-NWDAF may consider by default that V-NWDAF can request the data and/or analysis result of the first UE, so that the data and/or analysis result of the first UE can be sent to V-NWDAF.

In some embodiments, the first request information includes: success indication information, where the success indication information is used to indicate that the user allows the data and/or analysis result to be provided to V-NWDAF.

In this way, in some embodiments of the present disclosure, the first request information sent to H-NWDAF through V-NWDAF may further include the success indication information, thereby informing H-NWDAF that the first UE has agreed to provide the data and/or analysis result, so that H-NWDAF is to directly send the data and/or analysis result of the first UE to V-NWDAF based on the first request information.

For the above embodiments, specific reference may be made to the descriptions of the first UE and/or the second UE side and/or the first network node and/or the third network node, which will not be repeated here.

It should be noted that those skilled in the art can understand that the methods provided in the embodiments of the present disclosure can be performed alone or together with some methods in other embodiments of the present disclosure or some methods in related art.

The following information processing method is performed by H-NWDAF, which is similar to the above description of the information processing method performed by NF in VPLMN and/or V-NWDAF. Moreover, for those technical details not disclosed in the information processing method embodiments performed by H-NWDAF, reference may be made to the description of the information processing method examples performed by NF in VPLMN and/or V-NWDAF, which will not be described in detail here.

As shown in FIG. 5, some embodiments of the present disclosure provide an information processing method, which is performed by H-NWDAF and includes the followings.

In step S51, first request information sent by V-NWDAF is received, where the first request information includes first identity information of at least one first UE, and the first request information is used to request data and/or analysis result of the first UE.

In step S52, second request information is sent to UDM, where the second request information includes the first identity information, and the second request information is used to request user consent information of the first UE.

In some embodiments of the present disclosure, the first request information and the second request information may respectively be the first request information and the second request information in the above embodiments; the first identity information and the user consent information may respectively be the first identity information and the user consent information in the above embodiments.

Exemplarily, both the first request information and the second request information may include at least one of the following:
roaming indication information, indicating that the first UE is a roaming UE;
network identity information, indicating VPLMN in which the first UE roams and/or an HPLMN to which the first UE belongs; and
second identity information of NF in VPLMN, where the second identity information includes at least one of: identity information indicating an APP in NF; service identity information indicating a service, and identity information indicating NF.

Exemplarily, the first request information is used to request data and/or analysis result of the first UE in VPLMN and/or HPLMN.

Exemplarily, the first identity information may be, but is not limited to, at least one of the following: SUCI, GUTI, SUPI, physical address, etc.

Exemplarily, the user consent information includes at least one of the following: first identity information of the first UE, and the user consent information further includes at least one of the following:
second identity information indicating NF in VPLMN, where the second identity information includes at least one of: identity information indicating an APP in NF, service identity information indicating a service, and identity information indicating NF;
information indicating a service purpose; and
a user consent result indicating whether the data and/or analysis result is allowed to be provided to HPLMN and/or VPLMN.

Exemplarily, the user consent result includes at least one of the following:
a first consent result, used to indicate that the data and/or analysis result in HPLMN is allowed to be provided to HPLMN;
a second consent result, used to indicate that the data and/or analysis result in VPLMN is allowed to be provided to VPLMN;
a third consent result, used to indicate that the analysis result in HPLMN is allowed to be provided to HPLMN and/or VPLMN, but the data in HPLMN is not allowed to be provided to HPLMN and/or VPLMN; and/or used to indicate that the analysis result in VPLMN is allowed to be provided to HPLMN and/or VPLMN, but the data in VPLMN is not allowed to be provided to HPLMN and/or VPLMN; and
a fourth consent result, used to indicate that the data and/or analysis result in HPLMN is allowed to be provided to HPLMN and/or VPLMN, and to indicate that the data and/or analysis result in VPLMN is allowed to be provided to HPLMN and/or VPLMN.

Exemplarily, the second request information may be a Nudm_SDM_GetRequest message.

Some embodiments of the present disclosure provide an information processing method, performed by H-NWDAF and includes: receiving second response information sent by UDM, where the second response information includes user consent information of the first UE.

In some embodiments of the present disclosure, the second response information may be the second response information in the above embodiments. For example, the second response message may be a Nudm_SDM_Get response message.

In some embodiments of the present disclosure, after receiving the first request information sent by V-NWDAF, H-NWDAF can send the second request information to UDM to obtain the user consent information of the first UE, so that it is beneficial for H-NWDAF to determine, based on the user consent information of the first UE, whether to provide the data and/or analysis result of the first UE to NF in VPLMN.

In some embodiments, sending the second request information to UDM in step S52 includes: sending the second request information to UDM based on the fact that there is no user consent information of the first UE in H-NWADF.

Some embodiments of the present disclosure provide an information processing method, performed by H-NWDAF and includes: sending the second request information to UDM based on the fact that there is no user consent information of the first UE in H-NWADF.

In some embodiments of the present disclosure, only when there is no user consent information of the first UE in H-NWDAF, the second request information is sent to UDM to obtain the user consent information of the first UE, thereby saving signaling overhead and the power consumption of NF (e.g., H-NWDAF or UDM) in respective networks.

Some embodiments of the present disclosure provide an information processing method, performed by H-NWDAF and includes: storing the user consent information of the first UE. In this way, when H-NWDAF obtains the user consent information of the first UE, it can store the user consent information of the first UE. Subsequently, when NF in VPLMN is to obtain the user consent information of the first UE from H-NWDAF, it is conducive to provide the user consent information of the first UE to NF in VPLMN without obtaining the same from UDM.

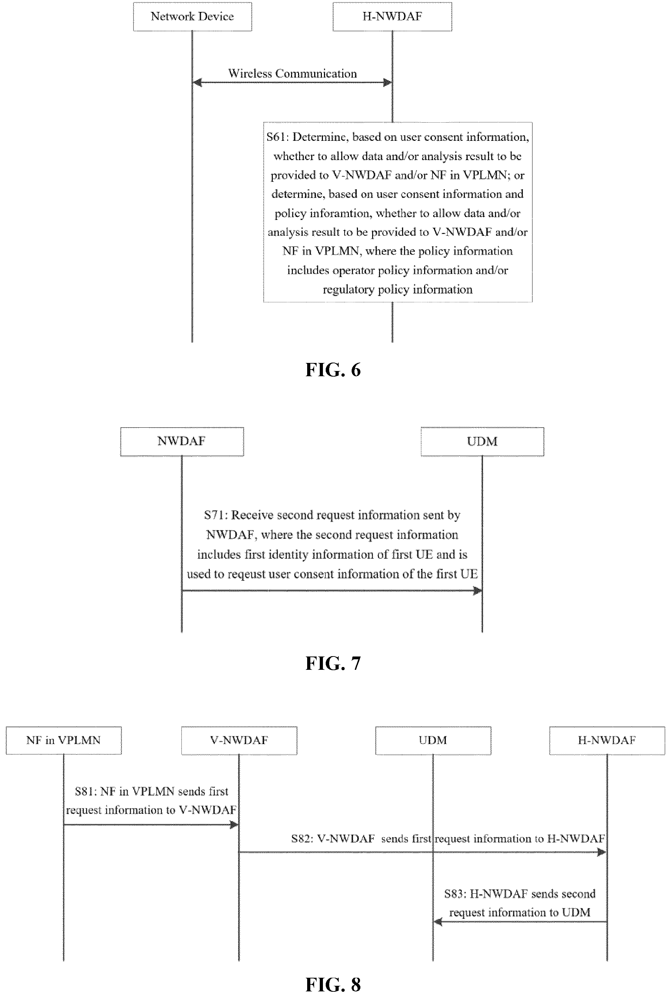

As shown in FIG. 6, some embodiments of the present disclosure provide an information processing method, which is performed by H-NWDAF and includes the followings.

In step S61, based on the user consent information, it is determined whether to allow data and/or analysis result to be provided to V-NWDAF and/or NF in VPLMN; or, based on the user consent information and policy information, it is determined whether to allow the data and/or analysis result to be provided to V-NWDAF and/or NF in VPLMN, where the policy information includes: operator policy information and/or regulation policy information.

In some embodiments of the present disclosure, the user consent information, operator policy information and regulation policy information may be the user consent information, operator policy information and regulation policy information in the above examples respectively.

In this way, in some embodiments of the present disclosure, H-NWDAF can determine, based on the user consent information or based on the user consent information and policy information, whether to allow the data and/or analysis result to be provided to V-NWDAF and/or NF in VPLMN. This provides a way to detect user consent information in the roaming scenario, which can reduce the risk of the first UE's data and/or analysis result being leaked in the roaming scenario.

In some embodiments, the method includes one of:
sending, in response to determining that the data and/or analysis result is allowed to be provided to V-NWDAF and/or NF in VPLMN, first response information to V-NWDAF, where the first response information includes the data and/or analysis of the first UE result;
sending, in response to determining that the data and/or analysis result is not allowed to be provided to V-NWDAF and/or NF in VPLMN, rejection indication information to V-NWDAF.

Some embodiments of the present disclosure provide an information processing method, which is performed by H-NWDAF and includes one of the following:
sending, in response to determining that the data and/or analysis result is allowed to be provided to V-NWDAF and/or NF in VPLMN, the first response information to V-NWDAF, where the first response information includes the data and/or analysis result of the first UE;
sending, in response to determining that the data and/or analysis result is not allowed to be provided to V-NWDAF and/or NF in VPLMN, the rejection indication information to V-NWDAF.

For example, if the first identity information of the first UE included in the user consent information matches the first identity information included in the second request information, and/or the second identity information of NF in VPLMN included in the user consent information matches the second identity information of NF in VPLMN included in the second request information, or the like, it is determined that the data and/or analysis result is allowed to be provided to V-NWDAF and/or NF in VPLMN. Alternatively, if the first identity information of the first UE included in the user consent information does not match the first identity information included in the second request information, and/or the second identity information of NF in VPLMN included in the user consent information does not match the second identity information of NF in VPLMN included in the second request information, or the like, it is determined that the data and/or analysis result is not allowed to be provided to V-NWDAF and/or NF in VPLMN.

For example, if the policy information stipulates that data and/or analysis result is only provided to Country A, and NF in VPLMN in the second request information is NF in VPLMN of Country A, then it is determined that the data and/or analysis result is allowed to be provided to V-NWDAF and/or NF in VPLMN.

For the above embodiments, specific reference may be made to the descriptions of NF in VPLMN and/or V-NWDAF, which will not be repeated here.

It should be noted that those skilled in the art can understand that the methods provided in the embodiments of the present disclosure can be performed alone or together with some methods in other embodiments of the present disclosure or some methods in related art.

Some embodiments of the present disclosure provide an information processing method, performed by H-NWDAF and includes:
receiving first request information sent by V-NWDAF, where the first request information includes first identity information of at least one first UE, and the first request information is used to request data and/analysis result of the first UE;
where the first request information is sent after V-NWDAF obtains the user consent information of the first UE.

In some embodiments, the first request information includes success indication information, where the success indication information is used to indicate that V-NWDAF successfully obtains the user consent information of the first UE.

Some embodiments of the present disclosure provide an information processing method, performed by H-NWDAF and includes: sending first response information to V-NWADF, where the first response information includes data and/or analysis result of the first UE.

In this way, in some embodiments of the present disclosure, H-NWDAF can also receive the first request information sent by V-NWDAF after obtaining the user consent information of the first UE, so that H-NWDAF can directly provide V-NWDAF with the data and/or analysis result of the first UE.

For the above embodiments, specific reference may be made to the descriptions of NF in VPLMN and/or V-NWDAFs, which will not be repeated here.

It should be noted that those skilled in the art can understand that the methods provided in the embodiments of the present disclosure can be performed alone or together with some methods in other embodiments of the present disclosure or some methods in related art.

The following information processing method is performed by UDM, which is similar to the description of the information processing method performed by NF in VPLMN and/or V-NWDAF and/or H-NWDAF. Moreover, for those technical details not disclosed in the information processing method embodiments performed by UDM, reference may be made to the description of the information processing method examples performed by NF in VPLMN and/or V-NWDAF and/or V-NWDAF, which will not be described in detail here.

As shown in FIG. 7, some embodiments of the present disclosure provide an information processing method, performed by UDM and includes the followings.

In step S71, second request information sent by NWDAF is received, where the second request information includes first identity information of the first UE, and the second request information is used to request user consent information of the first UE.

The second request information is sent by NWDAF after receiving the first request information, and the first request information is used to request data and/or analysis result of the first UE.

Some embodiments of the present disclosure provide an information processing method, performed by UDM and includes: sending second response information to NWDAF, where the second response information includes the user consent information of the first UE.

In some embodiments of the present disclosure, the first request information and the second request information may respectively be the first request information and the second request information in the above embodiments; the first identity information and the user consent information may respectively be the first identity information and the user consent information in the above embodiments; NWDAF is NWDAF in the above embodiments.

Exemplarily, NWDAF is V-NWDAF or H-NWDAF.

Exemplarily, both the first request information and the second request information may include at least one of the following:
roaming indication information, indicating that the first UE is a roaming UE;
network identity information, indicating VPLMN in which the first UE roams and/or an HPLMN to which the first UE belongs; and
second identity information of NF in VPLMN, where the second identity information includes at least one of: identity information indicating an APP in NF; service identity information indicating a service, and identity information indicating NF.

Exemplarily, the first request information is used to request data and/or analysis result of the first UE in VPLMN and/or HPLMN.

Exemplarily, the first identity information may be, but is not limited to, at least one of the following: SUCI, GUTI, SUPI, physical address, etc.

Exemplarily, the user consent information includes at least one of the following: first identity information of the first UE, and the user consent information further includes at least one of the following:
second identity information indicating NF in VPLMN, where the second identity information includes at least one of: identity information indicating an APP in NF, service identity information indicating a service, and identity information indicating NF;
information indicating a service purpose; and
a user consent result indicating whether the data and/or analysis result is allowed to be provided to HPLMN and/or VPLMN.

Exemplarily, the user consent result includes at least one of the following:
a first consent result, used to indicate that the data and/or analysis result in HPLMN is allowed to be provided to HPLMN;
a second consent result, used to indicate that the data and/or analysis result in VPLMN is allowed to be provided to VPLMN;
a third consent result, used to indicate that the analysis result in HPLMN is allowed to be provided to HPLMN and/or VPLMN, but the data in HPLMN is not allowed to be provided to HPLMN and/or VPLMN; and/or used to indicate that the analysis result in VPLMN is allowed to be provided to HPLMN and/or VPLMN, but the data in VPLMN is not allowed to be provided to HPLMN and/or VPLMN; and
a fourth consent result, used to indicate that the data and/or analysis result in HPLMN is allowed to be provided to HPLMN and/or VPLMN, and to indicate that the data and/or analysis result in VPLMN is allowed to be provided to HPLMN and/or VPLMN.

Some embodiments of the present disclosure provide an information processing method performed by UDM, and the method includes storing at least one of the following:
user consent information of a second UE, where the second UE includes the first UE;
policy information, where the policy information includes: operator policy information and/or regulation policy information.

In this way, in some embodiments of the present disclosure, the user consent information and policy information of each UE (e.g., the first UE or the second UE or a specific UE) can be maintained through UDM, thereby being advantageous for UDM to provide NWDAF (e.g., V-NWDAF or H- NWDAF) and the like with the user consent information.

For the above embodiments, specific reference may be made to the descriptions of NF in VPLMN and/or V-NWDAF and/or H-NWDAF, which will not be repeated here.

It should be noted that those skilled in the art can understand that the methods provided in the embodiments of the present disclosure can be performed alone or together with some methods in other embodiments of the present disclosure or some methods in related art.

The following information processing method is performed by a communication device(s) and is similar to the above description of the information processing method performed by NF in VPLMN and/or V-NWDAF and/or H-NWDAF and/or UDM. Moreover, for those technical details not disclosed in the embodiments of the information processing method performed by the communication device(s), reference may be made to the description of the information processing method examples performed by NF in VPLMN and/or V-NWDAF and/or V-NWDAF and/or UDM, which will not be described in detail here.

As shown in FIG. 8, some embodiments of the present disclosure provide an information processing method, which is performed by a communication device(s). The communication device(s) includes NF in VPLMN, V-NWDAF, H-NWDAF and UDM, and the information processing method includes the following steps.

In step S81, NF in VPLMN sends first request information to V-NWDAF.

Here, the first request information includes first identity information of at least one first UE, and the first request information is used to request data and/or analysis result of the first UE.

In step S82, V-NWDAF sends the first request information to H-NWDF.

In step S83, H-NWDAF sends second request information to UDM.

Here, the second request information includes the first identity information, and the second request information is used to request user consent information of the first UE.

In some embodiments of the present disclosure, the first request information, the second request information and the first identity information may be respectively the first request information, the second request information and the first identity information in the above embodiments; the user consent information may be the user consent information in the above embodiments.

Some embodiments of the present disclosure provide an information processing method, which is performed by a communication device(s). The communication device(s) includes NF in VPLMN, V-NWDAF, H-NWDAF and UDM, and the information processing method includes the following steps.

UDM sends second response information to H-NWDF, where the second response information includes the user consent information of the first UE.

H-NWDAF determines, based on user consent information, whether to allow the data and/or analysis result to be provided to V-NWDAF and/or NF in VPLMN; and send, in response to determining that the data and/or analysis result is allowed to be provided to V-NWDAF and/or NF in VPLMN, first response information to V-NWDAF, where the first response information includes the data and/or analysis result of the first UE.

V-NWDAF sends the first response information to NF in VPLMN.

In some embodiments of the present disclosure, the first response information and the second response information may be the first response information and the second response information respectively in the above embodiments.

For the above embodiments, specific reference may be made to the descriptions of NF in VPLMN and/or V-NWDAF and/or H-NWDAF, which will not be repeated here.

It should be noted that those skilled in the art can understand that the methods provided in the embodiments of the present disclosure can be performed alone or together with some methods in other embodiments of the present disclosure or some methods in related art.

In order to further explain any embodiments of the present disclosure, several specific examples are provided below.

The purposes of some embodiments of the present disclosure may include but are not limited to at least one of the following: (1) providing a method for HPLMN or VPLMN to check user consent in roaming scenarios of enhanced network automation (eNA); and (2) preventing user privacy information from being leaked in the roaming scenarios of eNA.

### Example I

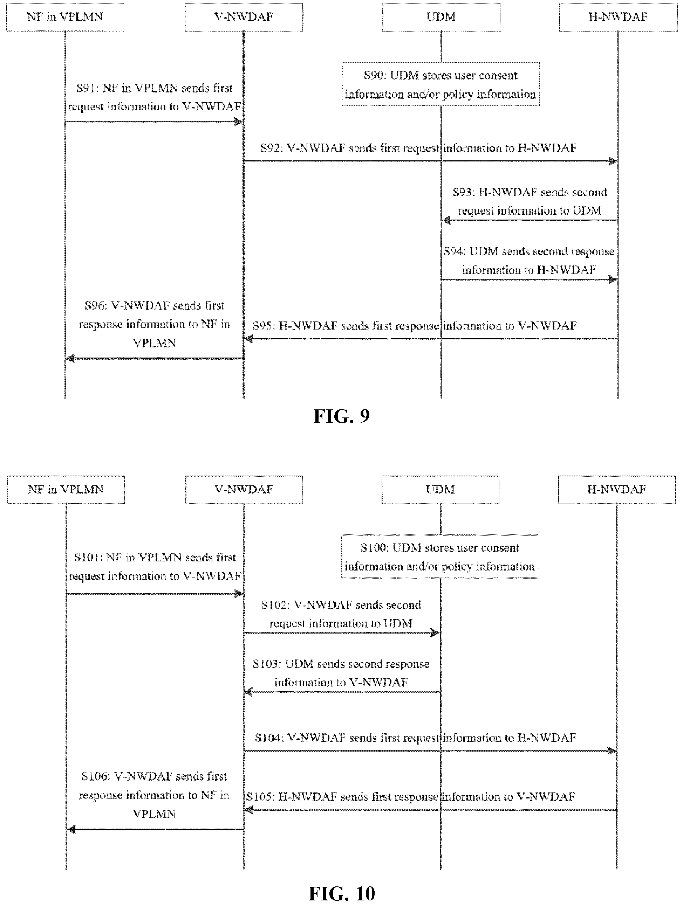

As shown in FIG. 9, some embodiments of the present disclosure provide an information processing method, which is performed by a communication device(s). The communication device(s) includes NF in VPLMN, V-NWDAF, UDM and H-NWDAF, and the information processing method includes the following steps.

In step S90, UDM stores user consent information and/or policy information.

Here, the first request information is used to request data and/or analysis result.

In an optional embodiment, UDM stores operator policy information and/or regulation policy information, user consent information specific to VPLMN. The user consent information of UE specific to VPLMN is associated with SUPI, and stored in UDM as subscription data. The regulation policy information is used in specified countries and/or regions and can be used in roaming scenarios. Here, the user consent information of UE specific to VPLMN may be the user consent information of the first UE in the above embodiments.

In step S91, NF in VPLMN sends the first request information to V-NWDAF.

In an optional embodiment, the first request information may be requests/subscribes analytics. NF in VPLMN sends the requests/subscribes analytics to V-NWDAF, where the requests/subscribes analytics includes a purpose of obtaining data and/or analysis result regarding a specific UE, a group of UEs, or any UE (including first identity information of the specific UE, the group of UEs or any UE, that is, the first identity information of the first UE), and the requests/subscribes analytics further includes roaming indication information indicating that the UE is a roaming UE and VPLMN identity information (VPLMN_ID) of VPLMN.

In step S92, V-NWDAF sends the first request information to H-NWDAF.

In an optional embodiment, the first request information may be an analytics request. V-NWDAF determines whether to allow NF in VPLMN to request data and/or analysis result based on policy information configured in V-NWDAF or provided to V-NWDAF. If yes, V-NWDAF discovers H-NWDAF and sends the analytics request to H-NWDAF.

In step S93, H-NWDAF sends second request information to UDM.

Here, the second request information is used to request the user consent information.

In an optional embodiment, the second request information may be a Nudm_SDM_GetRequest message. If H-NWDAF determines that the user consent information of the first UE is not stored in H-NWDAF, it sends the Nudm_SDM_GetRequest message to H-NWDAF to obtain and check the user consent information.

In step S94, UDM sends second response information to H-NWDAF.

In an optional embodiment, the second response information may be a Nudm_SDM_Get response message. UDM retrieves the user consent information of UE specific to VPLMN and sends the Nudm_SDM_Get response message to H-NWDAF, where the Nudm_SDM_Get response message includes the user consent information of UE specific to VPLMN.

In step S95, H-NWDAF sends first response information to V-NWDF.

In an optional embodiment, the first response information may be an analysis response. After H-NWDAF receives the Nudm_SDM_Get response message, it stores the user consent information of UE specific to VPLMN in the context of UE in H-NWDAF. H-NWDAF determines, based on the operator policy, VPLMN roaming agreement and the user consent information of UE specific to VPLMN, whether the data and/or analysis result from HPLMN is allowed to be provided to NF in VPLMN. If yes, H-NWDAF exposes the data and/or analysis result in the home network, and sends the analysis response to V-NWDAF, where the analysis response includes the data and/or analysis result for NF in VPLMN.

In step S96, V-NWDAF sends the first response information to NF in VPLMN.

In an optional embodiment, the first response information may be Nnwdaf_ AnalyticsSubscription_Notify information. V-NWDAF sends the Nnwdaf_ AnalyticsSubscription_Notify information to NF in VPLMN, where the Nnwdaf_ AnalyticsSubscription_Notify information includes the data and/or analysis result of UE specific to VPLMN.

### Example II

As shown in FIG. 10, some embodiments of the present disclosure provide an information processing method, which is performed by a communication device(s). The communication device(s) includes NF in VPMN, V-NWDAF, UDM and H-NWDAF, and the information processing method includes the following steps.

In step S100, UDM stores user consent information and/or policy information.

Here, the first request information is used to request data and/or analysis result.

In an optional embodiment, UDM stores operator policy information and/or regulation policy information, user consent information specific to VPLMN. The user consent information of UE specific to VPLMN is associated with SUPI, and stored in UDM as subscription data. The regulation policy information is used in specified countries and/or regions and can be used in roaming scenarios. Here, the user consent information of UE specific to VPLMN may be the user consent information of the first UE in the above embodiments.

In step S101, NF in VPLMN sends the first request information to V-NWDAF.

In an optional embodiment, the first request information may be requests/subscribes analytics. NF in VPLMN sends the requests/subscribes analytics to V-NWDAF, where the requests/subscribes analytics includes a purpose of obtaining data and/or analysis result regarding a specific UE, a group of UEs, or any UE (including first identity information of the specific UE, the group of UEs or any UE, that is, the first identity information of the first UE), and the requests/subscribes analytics further includes roaming indication information indicating that these UE are roaming UEs and VPLMN identity information (VPLMN_ID) of VPLMN.

In step S102, V-NWDAF sends second request information to UDM.

Here, the second request information is used to request the user consent information.

In an optional embodiment, the second request information may be a Nudm_SDM_GetRequest message. If H-NWDAF determines that the user consent information of the first UE is not stored in V-NWDAF, it sends the Nudm_SDM_GetRequest message to UDM via the SEPP of two PLMNs (VPLMN and HPLMN), so as to obtain and check the user consent information.

In step S103, UDM sends second response information to V-NWDAF.

In an optional embodiment, the second response information may be a Nudm_SDM_Get response message. UDM retrieves the user consent information of UE specific to VPLMN and sends the Nudm_SDM_Get response message to V-NWDAF, where the Nudm_SDM_Get response message includes the user consent information of UE specific to VPLMN.

In step S104, V-NWDAF sends first request information to H-NWDAF.

In an optional embodiment, the first request information may be an analytics request. After receiving the Nudm_SDM_Get response message, V-NWDAF stores the user consent information of UE specific to VPLMN in the context of the UE in V-NWDAF. V-NWDAF determines, based on the operator policy, VPLMN roaming agreement and the user consent information of UE specific to VPLMN, whether to allow the analysis result from VPLMN to be provided to NF in VPLMN. If yes, V-NWDAF discovers H-NWDAF, and sends an analysis request to H-NWDAF.

In step S105, H-NWDAF sends first response information to V-NWDAF.

In an optional embodiment, the first response information may be an analysis response. H-NWDAF exposes the data and/or analysis result in the home network, and sends the analysis response to V-NWDAF, where the analysis response includes the data and/or analysis result for NF in VPLMN.

In step S106, V-NWDAF sends the first response information to NF in VPLMN.

In an optional embodiment, the first response information may be Nnwdaf_ AnalyticsSubscription_Notify information. V-NWDAF sends the Nnwdaf_ AnalyticsSubscription_Notify information to NF in VPLMN, where the Nnwdaf_ AnalyticsSubscription_Notify information includes the data and/or analysis result of UE specific to VPLMN.

It should be noted that those skilled in the art can understand that the methods provided in the embodiments of the present disclosure can be performed alone or together with some methods in other embodiments of the present disclosure or some methods in related art.

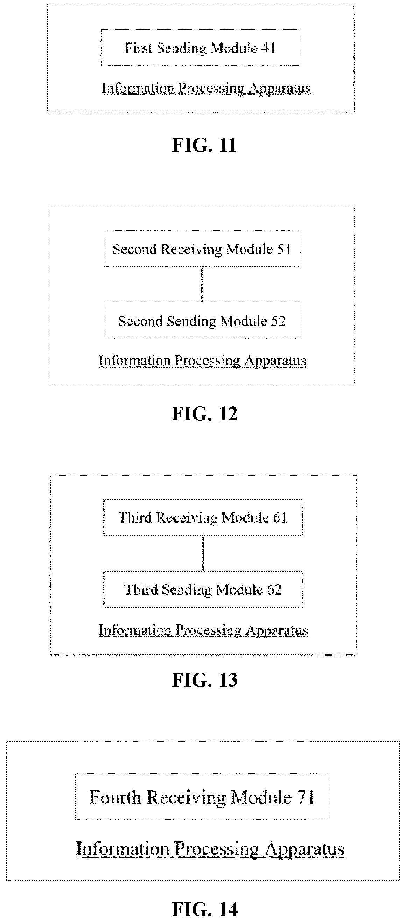

As shown in FIG. 11, some embodiments of the present disclosure provide an information processing apparatus and includes:
a first sending module 41, configured to send first request information to NWDAF, thereby causing NWDAF to send second request information to UDM; where the first request information includes first identity information of at least one first UE, and the first request information is used to request data and/or analysis result of the first UE;the second request information includes the first identity information, and the second request information is used to request user consent information of the first UE.

An information processing apparatus according to some embodiments of the present disclosure includes: NF in VPLMN.

In some embodiments, the first request information further includes at least one of the following:
roaming indication information, indicating that the first UE is a roaming UE;
network identity information, indicating VPLMN in which the first UE roams and/or HPLMN to which the first UE belongs; and
second identity information of NF in VPLMN, where the second identity information includes at least one of: identity information indicating an APP in NF; service identity information indicating a service, and identity information indicating NF.

In some embodiments, NWDAF is V-NWDAF or H-NWDAF.

Some embodiments of the present disclosure provide an information processing apparatus and includes: a first receiving module configured to receive first response information sent by V-NWDAF, where the first response information includes: the data and/or analysis result of the first UE.

Alternatively, the first receiving module is configured to receive rejection indication information sent by V-NWDAF, where the rejection indication information is used to indicate that the data and/or analysis result is not allowed to be provided to NF in VPLMN.

As shown in FIG. 12, some embodiments of the present disclosure provide an information processing apparatus and includes:
a second receiving module 51, configured to receive first request information sent by NF in VPLMN, where the first request information includes first identity information of at least one first UE, and the first request information is used to request data and/or analysis result of the first UE; and
a second sending module 52, configured to send the first request information to H-NWDAF, thereby causing the H-NWDAF to send second request information to UDM, where the second request information includes the first identity information, and the second request information is used to request user consent information of the first UE.

An information processing apparatus according to some embodiments of the present disclosure includes: V-NWDAF.

In some embodiments, the first request information further includes at least one of the following:
roaming indication information, indicating that the first UE is a roaming UE;
network identity information, indicating VPLMN in which the first UE roams and/or HPLMN to which the first UE belongs; and
second identity information of NF in VPLMN, where the second identity information includes at least one of: identity information indicating an APP in NF; service identity information indicating a service, and identity information indicating NF.

Some embodiments of the present disclosure provide an information processing apparatus and includes: a first processing module, configured to determine, based on policy information, that NF in VPLMN is allowed to request the data and/or analysis result, where the policy information includes: operator policy information and/or regulation policy information; and
a second sending module 52, configured to send the first request information to H-NWDAF.

Some embodiments of the present disclosure provide an information processing apparatus and includes: a second receiving module 51, configured to receive first response information sent by H-NWDAF, where the first response information includes the data and/or analysis result of the first UE.

The second sending module 52 is configured to send the first response information to NF in VPLMN.

Some embodiments of the present disclosure provide an information processing apparatus and includes: a second receiving module 51, configured to receive rejection indication information sent by H-NWDAF, where the rejection indication information is used to indicate that the data and/or analysis result is not allowed to be provided to NF in VPLMN.

The second sending module 52 is configured to send a rejection indication message to NF in VPLMN.

In some embodiments, the user consent information includes at least one of: the first identity information of the first UE, and further includes at least one of:
second identity information indicating NF in VPLMN, where the second identity information includes at least one of: identity information indicating an APP in NF, service identity information indicating a service, and identity information indicating NF;
information indicating a service purpose; and
a user consent result indicating whether the data and/or analysis result is allowed to be provided to HPLMN and/or VPLMN.

In some embodiments, the user consent result includes at least one of:
a first consent result, used to indicate that the data and/or analysis result in HPLMN is allowed to be provided to HPLMN;
a second consent result, used to indicate that the data and/or analysis result in VPLMN is allowed to be provided to VPLMN;
a third consent result, used to indicate that the analysis result in HPLMN is allowed to be provided to HPLMN and/or VPLMN, but the data in HPLMN is not allowed to be provided to HPLMN and/or VPLMN; and/or used to indicate that the analysis result in VPLMN is allowed to be provided to HPLMN and/or VPLMN, but the data in VPLMN is not allowed to be provided to HPLMN and/or VPLMN; and
a fourth consent result, used to indicate that the data and/or analysis result in HPLMN is allowed to be provided to HPLMN and/or VPLMN, and to indicate that the data and/or analysis result in VPLMN is allowed to be provided to HPLMN and/or VPLMN.

As shown in FIG. 13, some embodiments of the present disclosure provide an information processing apparatus and includes:
a third receiving module 61, configured to receive first request information sent by V-NWDAF, where the first request information includes first identity information of at least one first UE, and the first request information is used to request data and/or analysis result of the first UE; and
a third sending module 62, configured to send second request information to UDM, where the second request information includes the first identity information, and the second request information is used to request user consent information of the first UE.

An information processing apparatus according to some embodiments of the present disclosure includes: V-NWDAF.

In some embodiments, the first request information further includes at least one of:
roaming indication information, indicating that the first UE is a roaming UE;
network identity information, indicating VPLMN in which the first UE roams and/or HPLMN to which the first UE belongs; and
second identity information, where the second identity information includes at least one of: identity information indicating an APP in NF; service identity information indicating a service, and identity information indicating NF.

Some embodiments of the present disclosure provide an information processing apparatus and includes: a third sending module 61, configured to send, if the user consent information of the first UE is not stored in H-NWADF, the second request information to UDM.

Some embodiments of the present disclosure provide an information processing apparatus and includes: a third receiving module 62, configured to receive second response information sent by UDM, where the second response information includes the user consent information of the first UE.

Some embodiments of the present disclosure provide an information processing apparatus and includes: a second processing module, configured to store the user consent information of the first UE.

Some embodiments of the present disclosure provide an information processing apparatus and includes: a second processing module, configured to perform one of the following:
determining, based on the user consent information, whether to allow the data and/or analysis result to be provided to V-NWDAF and/or NF in VPLMN; and
determining, based on the user consent information and policy information, whether to allow the data and/or analysis result to be provided to V-NWDAF and/or NF in VPLMN, where the policy information includes: operator policy information and/or regulation policy information.

Some embodiments of the present disclosure provide an information processing apparatus and includes: a third sending module 62, configured to send, in response to determining that the data and/or analysis result is allowed to be provided to V-NWDAF and/or NF in VPLMN, first response information to V-NWDAF, where the first response information includes: the data and/or analysis result of the first UE.

Some embodiments of the present disclosure provide an information processing apparatus and includes: a third sending module 62, configured to send, in response to determining that the data and/or analysis result is not allowed to be provided to the V-NWDAF and/or the NF in the VPLMN, rejection indication information to the V-NWDAF.

In some embodiments, the user consent information includes at least one of: the first identity information of the first UE, and further includes at least one of:
second identity information indicating NF in VPLMN, where the second identity information includes at least one of: identity information indicating an APP in NF, service identity information indicating a service, and identity information indicating NF;
information indicating a service purpose; and
a user consent result indicating whether the data and/or analysis result is allowed to be provided to HPLMN and/or VPLMN.

In some embodiments, the user consent result includes at least one of:
a first consent result, used to indicate that the data and/or analysis result in HPLMN is allowed to be provided to HPLMN;
a second consent result, used to indicate that the data and/or analysis result in VPLMN is allowed to be provided to VPLMN;
a third consent result, used to indicate that the analysis result in HPLMN is allowed to be provided to HPLMN and/or VPLMN, but the data in HPLMN is not allowed to be provided to HPLMN and/or VPLMN; and/or used to indicate that the analysis result in VPLMN is allowed to be provided to HPLMN and/or VPLMN, but the data in VPLMN is not allowed to be provided to HPLMN and/or VPLMN; and
a fourth consent result, used to indicate that the data and/or analysis result in HPLMN is allowed to be provided to HPLMN and/or VPLMN, and to indicate that the data and/or analysis result in VPLMN is allowed to be provided to HPLMN and/or VPLMN.

As shown in FIG. 14, some embodiments of the present disclosure provide an information processing apparatus and includes:
a fourth receiving module 71, configured to receive second request information sent by NWDAF, where the second request information includes first identity information of a first UE, and the second request information is used to request user consent information of the first UE;
where the second request information is sent by NWDAF after receiving first request information, and the first request information is used to request data and/or analysis result of the first UE.

An information processing apparatus according to some embodiments of the present disclosure includes: UDM.

In some embodiments, NWDAF is V-NWDAF or H-NWDAF.

Some embodiments of the present disclosure provide an information processing apparatus and includes: a fourth sending module, configured to send second response information to NWDAF, where the second response information includes user consent information of the first UE.

In some embodiments, the user consent information includes at least one of: the first identity information of the first UE, and further includes at least one of:
second identity information indicating NF in VPLMN, where the second identity information includes at least one of: identity information indicating an APP in NF, service identity information indicating a service, and identity information indicating NF;
information indicating a service purpose; and
a user consent result indicating whether the data and/or analysis result is allowed to be provided to HPLMN and/or VPLMN.

In some embodiments, the user consent result includes at least one of:
a first consent result, used to indicate that the data and/or analysis result in HPLMN is allowed to be provided to HPLMN;
a second consent result, used to indicate that the data and/or analysis result in VPLMN is allowed to be provided to VPLMN;
a third consent result, used to indicate that the analysis result in HPLMN is allowed to be provided to HPLMN and/or VPLMN, but the data in HPLMN is not allowed to be provided to HPLMN and/or VPLMN; and/or used to indicate that the analysis result in VPLMN is allowed to be provided to HPLMN and/or VPLMN, but the data in VPLMN is not allowed to be provided to HPLMN and/or VPLMN; and
a fourth consent result, used to indicate that the data and/or analysis result in HPLMN is allowed to be provided to HPLMN and/or VPLMN, and to indicate that the data and/or analysis result in VPLMN is allowed to be provided to HPLMN and/or VPLMN.

Some embodiments of the present disclosure provide an information processing apparatus and includes: a third processing module, where the third processing module is configured to store at least one of the following:
user consent information of a second UE, where the second UE includes the first UE; and
policy information, where the policy information includes: operator policy information and/or regulation policy information.

It should be noted that those skilled in the art can understand that the apparatuses according to some embodiments of the present disclosure can be implemented alone or together with some apparatuses according to other embodiments of the present disclosure or some apparatuses in related art.

Regarding the apparatuses in the above embodiments, the specific manner in which each module performs operations has been described in detail in the embodiments related to the method, and will not be described in detail here.

Some embodiments of the present disclosure provide a communication device and includes:
a processor;
a memory used to store instructions executable by the processor;
where the processor, upon running the executable instructions, is configured to implement the event reporting allowed area setting method according to any embodiment of the present disclosure.

In some embodiments, the communication device may include but is not limited to at least one of: NF in VPLMN, NWDAF and UDM. Here, NWDAF includes: V-NWDAF or H-NWDAF.

The processor may include various types of storage medium, which are non-transitory computer storage medium that can continue to memorize the information stored thereon after the user equipment is powered off.

The processor may be connected to the memory through a bus or the like, and be used to read the executable program stored on the memory, for example, at least one of the methods shown in FIG. 2 to FIG. 10.

Some embodiments of the present disclosure further provide a computer storage medium. The computer storage medium stores a computer executable program. When the executable program is executed by a processor, the event reporting allowed area setting method according to any embodiment of the present disclosure, for example, at least one of the methods shown in FIG. 2 to FIG. 10, is implemented.

Regarding the device or storage medium in the above embodiments, the specific manner in which each module performs operations has been described in detail in the embodiments related to the method, and will not be described in detail here.

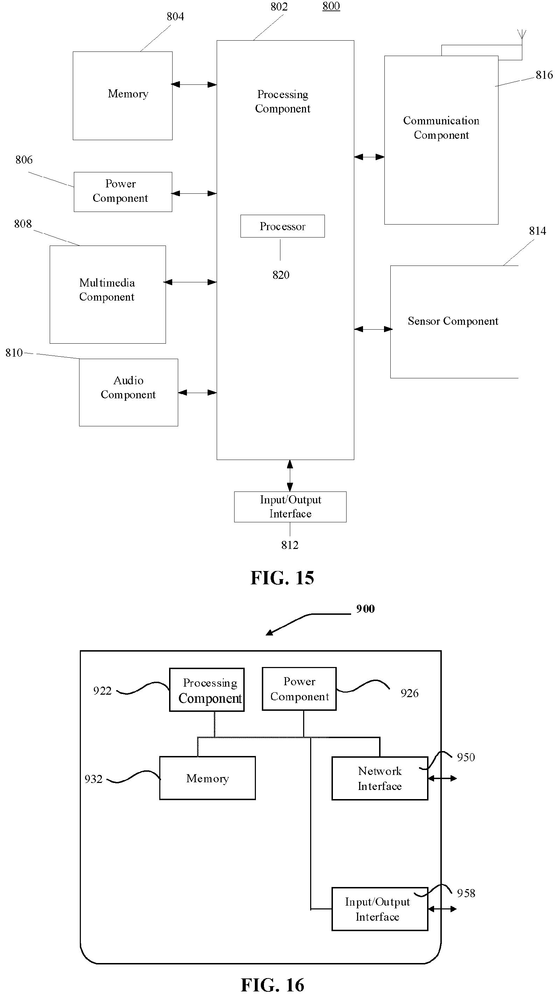

FIG. 15 is a block diagram showing a UE 800 according to some embodiments. For example, the UE 800 may be a mobile phone, a computer, a digital broadcast terminal, a messaging device, a game console, a tablet device, a medical device, a fitness device, a personal digital assistant, and the like.

Referring to FIG. 15, the UE 800 may include one or more of the following components: processing component 802, memory 804, power component 806, multimedia component 808, audio component 810, input/output (I/O) interface 812, sensor component 814, and communication component 816.

The processing component 802 generally controls the overall operation of the UE 800, such as operations associated with display, phone calls, data communications, camera operations, and recording operations. The processing component 802 may include one or more processors 820 to execute instructions to perform all or some of the steps of the methods described above. Additionally, the processing component 802 may include one or more modules that facilitate interaction between the processing component 802 and other components. For example, the processing component 802 may include a multimedia module to facilitate interaction between the multimedia component 808 and the processing component 802.

The memory 804 is configured to store various types of data to support operation at the UE 800. Examples of such data include instructions, contact data, phonebook data, messages, pictures, videos, and the like for any application or method operating on the UE 800. The memory 804 may be implemented by any type of volatile or non-volatile storage device or combination thereof, such as static random access memory (SRAM), electrically erasable programmable read only memory (EEPROM), erasable programmable read only memory (EPROM), programmable read only memory (PROM), read only memory (ROM), magnetic memory, flash memory, magnetic or optical disk.

The power component 806 provides power to various components of the UE 800. The power component 806 may include a power management system, one or more power sources, and other components associated with generating, managing, and distributing power to the UE 800.

The multimedia component 808 includes a screen that provides an output interface between the UE 800 and the user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touch, swipe, and gestures on the touch panel. The touch sensor may not only sense the boundaries of a touch or swipe action, but also detect the duration and pressure associated with the touch or swipe action. In some embodiments, the multimedia component 808 includes a front camera and/or a rear camera. When the UE 800 is in an operation mode, such as a shooting mode or a video mode, the front camera and/or the rear camera may receive external multimedia data. Each of the front and rear cameras may be a fixed optical lens system or have focal length and optical zoom capability.

The audio component 810 is configured to output and/or input audio signals. For example, the audio component 810 includes a microphone (MIC) that is configured to receive external audio signals when the UE 800 is in operating modes, such as calling mode, recording mode, and voice recognition mode. The received audio signal may be further stored in the memory 804 or transmitted via the communication component 816. In some embodiments, the audio component 810 also includes a speaker for outputting audio signals.

The I/O interface 812 provides an interface between the processing component 802 and a peripheral interface module, which may be a keyboard, a click wheel, a button, or the like. These buttons may include, but are not limited to: home button, volume buttons, start button, and lock button.

The sensor assembly 814 includes one or more sensors for providing status assessments of various aspects of the UE 800. For example, the sensor assembly 814 can detect the open/closed state of the UE 800, the relative positioning of components, such as the display and keypad of the UE 800. The sensor assembly 814 can also detect a change in the position of the UE 800 or a component of the UE 800, the presence or absence of user contact with the UE 800, the orientation or acceleration/deceleration of the UE 800, and the temperature change of the UE 800. The sensor assembly 814 may include a proximity sensor configured to detect the presence of nearby objects in the absence of any physical contact. The sensor assembly 814 may also include a light sensor, such as a CMOS or CCD image sensor, for use in imaging applications. In some embodiments, the sensor assembly 814 may also include an acceleration sensor, a gyroscope sensor, a magnetic sensor, a pressure sensor, or a temperature sensor.

The communication component 816 is configured to facilitate wired or wireless communication between the UE 800 and other devices. The UE 800 may access wireless networks based on communication standards, such as WiFi, 4G or 5G, or a combination thereof. In some embodiments, the communication component 816 receives broadcast signals or broadcast related information from an external broadcast management system via a broadcast channel. In some embodiments, the communication component 816 also includes a near field communication (NFC) module to facilitate short-range communication. For example, NFC module may be implemented based on radio frequency identification (RFID) technology, infrared data association (IrDA) technology, ultra-wideband (UWB) technology, Bluetooth (BT) technology and other technologies.

In some embodiments, the UE 800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components, which are configured to perform the forgoing methods.

In some embodiments, there is also provided a non-transitory computer-readable storage medium including instructions, such as the memory 804 including instructions, executable by the processor 820 of the UE 800 to perform the method described above. For example, the non-transitory computer-readable storage medium may be ROM, random access memory (RAM), CD-ROM, magnetic tape, floppy disk, optical data storage device, and the like.

As shown in FIG. 16, it shows a structure of a base station according to some embodiments. For example, the base station 900 may be provided as a network side device. Referring to FIG. 16, the base station 900 includes a processing component 922, which further includes one or more processors; and a memory resource represented by memory 932 for storing instructions executable by the processing component 922, such as application programs. The application program stored in memory 932 may include one or more modules each corresponding to a set of instructions. In addition, the processing component 922 is configured to execute instructions to perform any foregoing method applied in the base station.

The base station 900 may also include a power component 926 configured to perform power management of the base station 900, a wired or wireless network interface 950 configured to connect the base station 900 to a network, and an input-output (I/O) interface 958. The base station 900 can operate based on an operating system stored in the memory 932, such as Windows Server^{™}, Mac OS X^{™}, Unix^{™}, Linux^{™}, FreeBSD^{™} or the like.

Other embodiments of this disclosure will be readily apparent to those skilled in the art from consideration of the specification and practice of the invention disclosed herein. This application is intended to cover any modification, use or adaptation of this disclosure, and these modifications, uses or adaptations follow the general principles of this disclosure and include common knowledge or conventional technical means in the art, which are not disclosed here. The specification and examples are to be considered exemplary only, with a true scope and spirit of the disclosure being indicated by the following claims.

It should be understood that this disclosure is not limited to the precise constructions which have been described above and shown in the drawings, and various modifications and changes may be made without departing from the scope thereof. The scope of this disclosure is limited only by the scope of the appended claims.

## Claims

1. An information processing method, performed by a network function NF in a visited public land mobile network VPLMN, comprising:
sending first request information to a network data analytics function NWDAF, thereby causing the NWDAF to send second request information to a unified data management UDM;
wherein, the first request information comprises first identity information of at least one first UE, and the first request information is used to request data and/or analysis result of the first UE; the second request information comprises the first identity information, and the second request information is used to request user consent information of the first UE.

2. The method according to claim 1, wherein the first request information further comprises at least one of:
roaming indication information, indicating that the first UE is a roaming UE;
network identity information, indicating the VPLMN in which the first UE roams and/or a home public land mobile network HPLMN to which the first UE belongs; and
second identity information of the NF in the VPLMN, wherein the second identity information comprises at least one of: identity information indicating an APP in the NF; service identity information indicating a service, and identity information indicating the NF.

3. The method according to claim 1 or 2, wherein the NWDAF is a visited network data analytics function V-NWDAF or a home network data analytics function H-NWDAF.

4. The method according to claim 3, comprising at least one of:
receiving first response information sent by the V-NWDAF, wherein the first response information comprises: the data and/or analysis result of the first UE; and
receiving rejection indication information sent by the V-NWDAF, wherein the rejection indication information is used to indicate that the data and/or analysis result is not allowed to be provided to the NF in the VPLMN.

5. An information processing method, performed by a visited network data analytics function V-NWDAF, comprising:
receiving first request information sent by a network function NF in a visited public land function VPLMN, wherein the first request information comprises first identity information of at least one first UE, and the first request information is used to request data and/or analysis result of the first UE; and
sending the first request information to a home network data analytics function H-NWDAF, thereby causing the H-NWDAF to send second request information to a unified data management UDM, wherein the second request information comprises the first identity information, and the second request information is used to request user consent information of the first UE.

6. The method according to claim 5, wherein the first request information further comprises at least one of:
roaming indication information, indicating that the first UE is a roaming UE;
network identity information, indicating the VPLMN in which the first UE roams and/or a home public land mobile network HPLMN to which the first UE belongs; and
second identity information of the NF in the VPLMN, wherein the second identity information comprises at least one of: identity information indicating an APP in the NF; service identity information indicating a service, and identity information indicating the NF.

7. The method according to claim 5, wherein sending the first request information to the H-NWDAF comprises:
determining, based on policy information, that the NF in the VPLMN is allowed to request the data and/or analysis result, wherein the policy information comprises: operator policy information and/or regulation policy information; and
sending the first request information to the H-NWDAF.

8. The method according to claim 5, comprising:
receiving first response information sent by the H-NWDAF, wherein the first response information comprises: the data and/or analysis result of the first UE; and
sending the first response information to the NF in the VPLMN.

9. The method according to claim 5, comprising:
receiving rejection indication information sent by the H-NWDAF, wherein the rejection indication information is used to indicate that the data and/or analysis result is not allowed to be provided to the NF in the VPLMN; and
sending the rejection indication message to the NF in the VPLMN.

10. The method according to claim 5, wherein the user consent information comprises at least one of: the first identity information of the first UE, and further comprises at least one of:
second identity information indicating the NF in the VPLMN, wherein the second identity information comprises at least one of: identity information indicating an APP in the NF, service identity information indicating a service, and identity information indicating the NF;
information indicating a service purpose; and
a user consent result indicating whether the data and/or analysis result is allowed to be provided to HPLMN and/or VPLMN.

11. The method according to claim 10, wherein the user consent result comprises at least one of:
a first consent result, used to indicate that the data and/or analysis result in HPLMN is allowed to be provided to HPLMN;
a second consent result, used to indicate that the data and/or analysis result in VPLMN is allowed to be provided to VPLMN;
a third consent result, used to indicate that the analysis result in HPLMN is allowed to be provided to HPLMN and/or VPLMN, but the data in HPLMN is not allowed to be provided to HPLMN and/or VPLMN; and/or used to indicate that the analysis result in VPLMN is allowed to be provided to HPLMN and/or VPLMN, but the data in VPLMN is not allowed to be provided to HPLMN and/or VPLMN; and
a fourth consent result, used to indicate that the data and/or analysis result in HPLMN is allowed to be provided to HPLMN and/or VPLMN, and to indicate that the data and/or analysis result in VPLMN is allowed to be provided to HPLMN and/or VPLMN.

12. An information processing method, performed by a home network data analytics function H-NWDAF, comprising:
receiving first request information sent by a visited network data analytics function V-NWDAF, wherein the first request information comprises first identity information of at least one first UE, and the first request information is used to request data and/or analysis result of the first UE; and
sending second request information to a unified data management UDM, wherein the second request information comprises the first identity information, and the second request information is used to request user consent information of the first UE.

13. The method according to claim 12, wherein the first request information further comprises at least one of:
roaming indication information, indicating that the first UE is a roaming UE;
network identity information, indicating a visited public land mobile network VPLMN in which the first UE roams and/or a home public land mobile network HPLMN to which the first UE belongs; and
second identity information, wherein the second identity information comprises at least one of: identity information indicating an APP in a network function NF; service identity information indicating a service, and identity information indicating the NF.

14. The method according to claim 12, wherein sending the second request information to the UDM comprises:
sending, if the user consent information of the first UE is not stored in the H-NWADF, the second request information to the UDM.

15. The method according to claim 12, comprising:
receiving second response information sent by the UDM, wherein the second response information comprises the user consent information of the first UE.

16. The method according to claim 15, comprising:
storing the user consent information of the first UE.

17. The method according to claim 15, comprising at least one of:
determining, based on the user consent information, whether to allow the data and/or analysis result to be provided to the V-NWDAF and/or a network function NF in a visited public land mobile network VPLMN; and
determining, based on the user consent information and policy information, whether to allow the data and/or analysis result to be provided to the V-NWDAF and/or the NF in the VPLMN, wherein the policy information comprises: operator policy information and/or regulation policy information.

18. The method according to claim 17, comprising at least one of:
sending, in response to determining that the data and/or analysis result is allowed to be provided to the V-NWDAF and/or the NF in the VPLMN, first response information to the V-NWDAF, wherein the first response information comprises: the data and/or analysis result of the first UE; and
sending, in response to determining that the data and/or analysis result is not allowed to be provided to the V-NWDAF and/or the NF in the VPLMN, rejection indication information to the V-NWDAF.

19. The method according to claim 12, wherein the user consent information comprises at least one of: the first identity information of the first UE, and further comprises at least one of:
second identity information indicating a network function NF in a visited public land mobile network VPLMN, wherein the second identity information comprises at least one of: identity information indicating an APP in the NF, service identity information indicating a service, and identity information indicating the NF;
information indicating a service purpose; and
a user consent result indicating whether the data and/or analysis result is allowed to be provided to HPLMN and/or VPLMN.

20. The method according to claim 19, wherein the user consent result comprises at least one of:
a first consent result, used to indicate that the data and/or analysis result in HPLMN is allowed to be provided to HPLMN;
a second consent result, used to indicate that the data and/or analysis result in VPLMN is allowed to be provided to VPLMN;
a third consent result, used to indicate that the analysis result in HPLMN is allowed to be provided to HPLMN and/or VPLMN, but the data in HPLMN is not allowed to be provided to HPLMN and/or VPLMN; and/or used to indicate that the analysis result in VPLMN is allowed to be provided to HPLMN and/or VPLMN, but the data in VPLMN is not allowed to be provided to HPLMN and/or VPLMN; and
a fourth consent result, used to indicate that the data and/or analysis result in HPLMN is allowed to be provided to HPLMN and/or VPLMN, and to indicate that the data and/or analysis result in VPLMN is allowed to be provided to HPLMN and/or VPLMN.

21. An information processing method, performed by a unified data management UDM, comprising:
receiving second request information sent by a network data analytics function NWDAF, wherein the second request information comprises first identity information of a first UE, and the second request information is used to request user consent information of the first UE,
wherein, the second request information is sent by the NWDAF after receiving first request information, and the first request information is used to request data and/or analysis result of the first UE.

22. The method according to claim 21, wherein the NWDAF is a visited network data analytics function V-NWDAF or a home network data analytics function H-NWDAF.

23. The method according to claim 21, comprising:
sending second response information to the NWDAF, wherein the second response information comprises the user consent information of the first UE.

24. The method according to claim 21, wherein the user consent information comprises at least one of: the first identity information of the first UE, and further comprises at least one of:
second identity information indicating a network function NF in a visited public land mobile network VPLMN, wherein the second identity information comprises at least one of: identity information indicating an APP in the NF, service identity information indicating a service, and identity information indicating the NF;
information indicating a service purpose; and
a user consent result indicating whether the data and/or analysis result is allowed to be provided to HPLMN and/or VPLMN.

25. The method according to claim 24, wherein the user consent result comprises at least one of:
a first consent result, used to indicate that the data and/or analysis result in HPLMN is allowed to be provided to HPLMN;
a second consent result, used to indicate that the data and/or analysis result in VPLMN is allowed to be provided to VPLMN;
a third consent result, used to indicate that the analysis result in HPLMN is allowed to be provided to HPLMN and/or VPLMN, but the data in HPLMN is not allowed to be provided to HPLMN and/or VPLMN; and/or used to indicate that the analysis result in VPLMN is allowed to be provided to HPLMN and/or VPLMN, but the data in VPLMN is not allowed to be provided to HPLMN and/or VPLMN; and
a fourth consent result, used to indicate that the data and/or analysis result in HPLMN is allowed to be provided to HPLMN and/or VPLMN, and to indicate that the data and/or analysis result in VPLMN is allowed to be provided to HPLMN and/or VPLMN.

26. The method according to claim 21, comprising storing at least one of:
user consent information of a second UE, wherein the second UE comprises the first UE; and
policy information, wherein the policy information comprises: operator policy information and/or regulation policy information.

27. An information processing method, performed by communication devices, wherein the communication devices comprise a network function NF in a visited public land mobile network VPLMN, a visited network data analytics function V-NWDAF, a home network data analytics function H-NWDAF, and a unified data management UDM, and the information processing method comprises:
sending, by the NF in the VPLMN, first request information to the V-NWDAF, wherein the first request information comprises first identity information of at least one first UE, and the first request information is used to request data and/or analysis result of the first UE;
sending, by the V-NWDAF, the first request information to the H-NWDF;
sending, by the H-NWDAF, second request information to the UDM, wherein the second request information comprises the first identity information, and the second request information is used to request user consent information of the first UE.

28. The method according to claim 27, comprising:
sending, by the UDM, second response information to the H-NWDF, wherein the second response information comprises the user consent information of the first UE; and
determining, by the H-NWDAF based on the user consent information, whether to allow the data and/or analysis result to be provided to the V-NWDAF and/or the NF in the VPLMN; and sending, in response to determining that the data and/or analysis result is allowed to be provided to the V-NWDAF and/or the NF in the VPLMN, first response information to the V-NWDAF, wherein the first response information comprises the data and/or analysis result of the first UE; and
sending, by the V-NWDAF, the first response information to the NF in the VPLMN.

29. An information processing apparatus, comprising:
a first sending module, configured to send first request information to a network data analytics function NWDAF, thereby causing the NWDAF to send second request information to a unified data management UDM;
wherein, the first request information comprises first identity information of at least one first UE, and the first request information is used to request data and/or analysis result of the first UE; the second request information comprises the first identity information, and the second request information is used to request user consent information of the first UE.

30. An information processing apparatus, comprising:
a second receiving module, configured to receive first request information sent by a network function NF in a visited public land function VPLMN, wherein the first request information comprises first identity information of at least one first UE, and the first request information is used to request data and/or analysis result of the first UE; and
a second sending module, configured to send the first request information to a home network data analytics function H-NWDAF, thereby causing the H-NWDAF to send second request information to a unified data management UDM, wherein the second request information comprises the first identity information, and the second request information is used to request user consent information of the first UE.

31. An information processing apparatus, comprising:
a third receiving module, configured to receive first request information sent by a visited network data analytics function V-NWDAF, wherein the first request information comprises first identity information of at least one first UE, and the first request information is used to request data and/or analysis result of the first UE; and
a third sending module, configured to send second request information to a unified data management UDM, wherein the second request information comprises the first identity information, and the second request information is used to request user consent information of the first UE.

32. An information processing apparatus, comprising:
a fourth receiving module, configured to receive second request information sent by a network data analytics function NWDAF, wherein the second request information comprises first identity information of a first UE, and the second request information is used to request user consent information of the first UE,
wherein, the second request information is sent by the NWDAF after receiving first request information, and the first request information is used to request data and/or analysis result of the first UE.

33. A communication device, comprising:
a processor; and
a memory configured to executable instructions of the processor,
wherein the processor is configured to, upon executing the executable instructions, implement the information processing method according to any one of claims 1-4, or claims 5-11, or claims 12-20, or claims 21-26, or claims 27-28.

34. A computer storage medium storing a computer executable program thereon, wherein the executable program, upon being executed by a processor, is used for implementing the information processing method according to any one of claims 1-4, or claims 5-11, or claims 12-20, or claims 21-26, or claims 27-28.
